# EUROPEAN PATENT APPLICATION

(11) **EP 4 498 454 A1**
(43) Date of publication of application: **29.01.2025**
(21) Application number: 23774680.5
(22) Date of filing: 14.03.2023
(51) Int. Cl.: H01M 4/62, H01M 4/13, H01M 4/139, H01M 10/052, H01M 10/0562, H01M 50/403, H01M 50/426, H01M 50/446, H01M 50/451

(54) **COMPOSITION FOR SECONDARY BATTERY**

(30) Priority: 23.03.2022 JP 2022046719
(71) Applicant: DAIKIN INDUSTRIES, LTD., Osaka-shi, Osaka 530-0001 (JP)
(72) Inventor: FURUTANI, Takahiro, Osaka-shi, Osaka 530-0001 (JP); YANO, Ryouichi, Osaka-shi, Osaka 530-0001 (JP); FUKUSHIMA, Kanta, Osaka-shi, Osaka 530-0001 (JP)
(74) Representative: Hoffmann Eitle
(86) International application number: PCT/JP2023/009941
(87) International publication number: WO 2023/182083

(57) **Abstract**

Provided is a secondary battery composition that uses a polymer having a structure originated from 1,2-difluoroethylene.

A secondary battery composition comprising a fluorine-containing polymer and a solvent, wherein the fluorine-containing polymer is the polymer comprising a structural unit represented by formula (1):

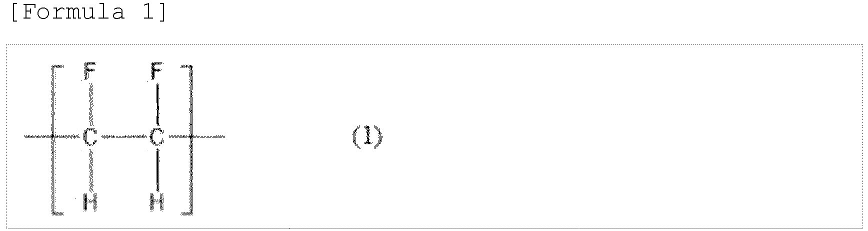

## Description

### Technical Field

The present disclosure relates to a secondary battery composition.

### Background Art

Fluorine-containing polymers are polymers that have been used in extremely many fields. Known monomers for producing these polymers are tetrafluoroethylene, vinylidene fluoride, hexafluoropropylene and the like. A production method of 1,2-difluoroethylene is disclosed in Patent Literature 1. Further, Non Patent Literature 1 discloses the compound and polymers that use the compound.

On the other hand, it is known to use a fluorine-containing resin such as polyvinylidene fluoride as a binder in an electrode and the like of a secondary battery (Patent Literature 2 and the like.)

### Citation List

### Patent Literature

Patent Literature 1: WO 2019/216239
Patent Literature 2: Japanese Patent Laid-Open No. 2016-25027

### Non Patent Literature

Non Patent Literature 1: Poly(vinylene fluoride), Synthesis and Properties W.S. Durrell et. Al. Journal of Polymer Science: Part A Vol.3, P2975-2982 (1965)

### Summary of Invention

### Technical Problem

The present disclosure aims to provide a secondary battery composition that uses a polymer having the structure originated from 1,2-difluoroethylene.

### Solution to Problem

The present disclosure provides a secondary battery composition comprising a fluorine-containing polymer and a solvent,
wherein the fluorine-containing polymer is a polymer comprising a structural unit represented by formula (1):

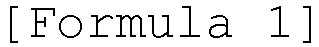

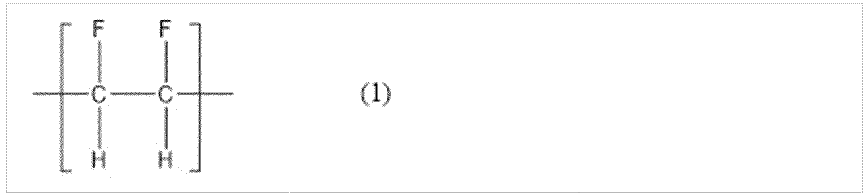

In the present disclosure, the fluorine-containing polymer may be a polymer further comprising a structural unit represented by formula (2): 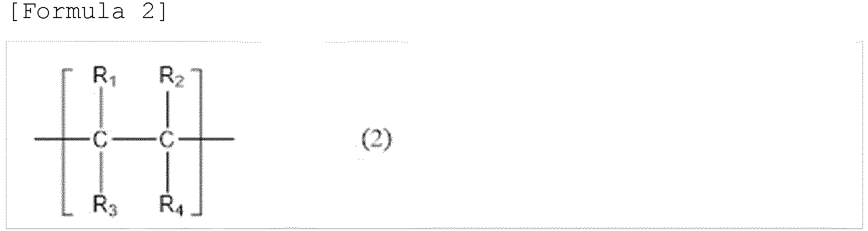 wherein R₁ is hydrogen, fluorine, a partly or wholly fluorinated hydrocarbon group having 5 or less carbon atoms, or an OR₅ group (R₅ group is a partly or wholly fluorinated hydrocarbon group having 5 or less carbon atoms); and R₂, R₃, R₄ are each independently hydrogen or fluorine.

Preferably, the structural unit represented by formula (2) is at least one structural unit selected from the group consisting of structural units represented by formulae (3) to (8):

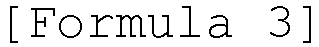

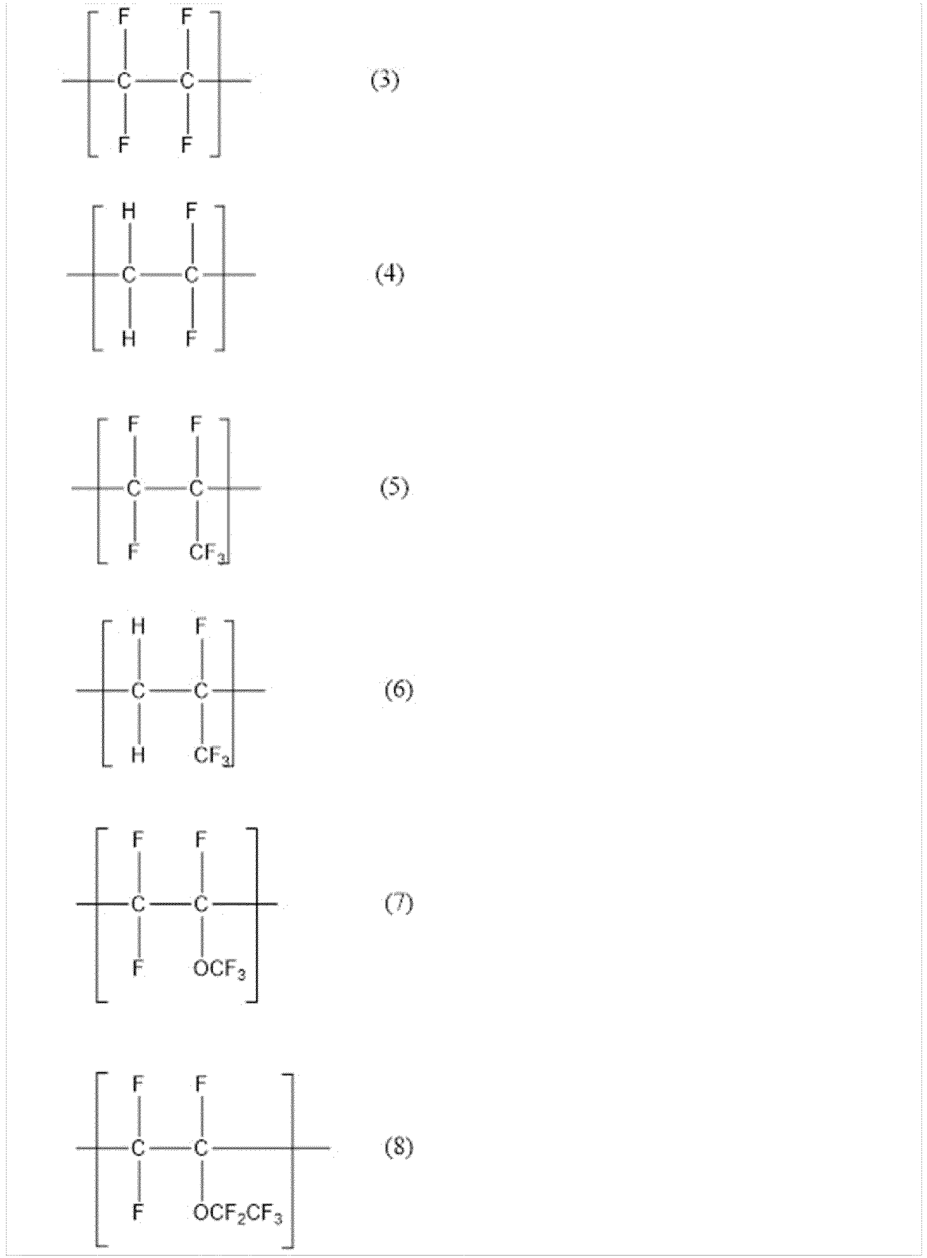

Preferably, the fluorine-containing polymer has a weight average molecular weight of 50,000 to 5,000,000.

Preferably, a proportion of the structural unit represented by formula (1) in the fluorine-containing polymer is 0.1 to 100 mol%.

Preferably, the solvent is at least one compound selected from the group consisting of ester compounds, ketone compounds, and amide compounds.

Preferably, the secondary battery composition is for an electrode of a secondary battery.

Preferably, the secondary battery composition is for a positive electrode of a secondary battery.

Preferably, the secondary battery composition is for a separator of a secondary battery.

The present disclosure is also a method for forming a layer for a secondary battery, comprising applying a slurry onto a substrate and heat drying, wherein the slurry comprises the secondary battery composition.

The present disclosure is also an electrode for a secondary battery, comprising an active material layer containing a polymer comprising a structural unit represented by formula (1) and an active material.

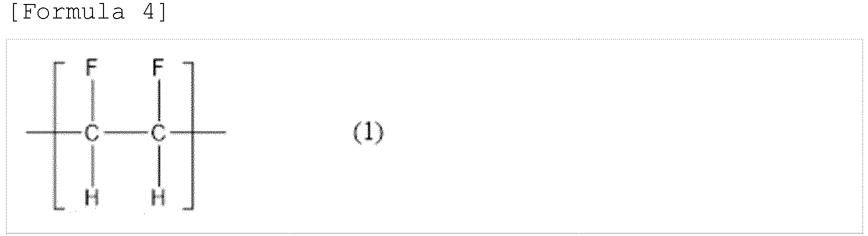

The present disclosure is also a solid electrolyte layer for a secondary battery, comprising a polymer comprising a structural unit represented by formula (1) and a solid electrolyte.

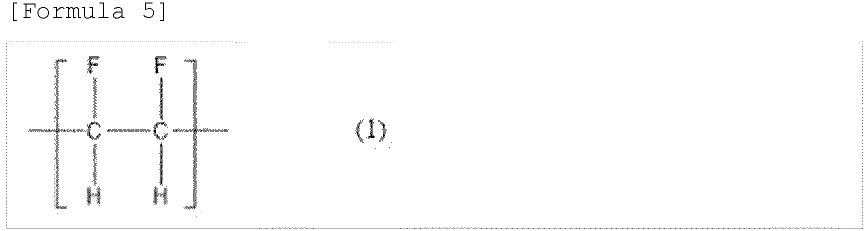

The present disclosure is also a separator for a secondary battery, comprising a polymer comprising a structural unit represented by formula (1):

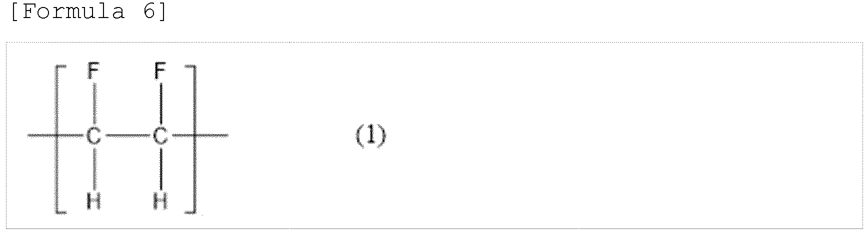

The present disclosure is also a secondary battery comprising the electrode for a secondary battery and/or the separator for a secondary battery.

### Advantageous Effects of Invention

The secondary battery composition of the present disclosure can be suitably used for forming an electrode and the like by taking advantage of excellent solubility in various common solvents of the polymer having the structure originated from 1,2-difluoroethylene.

### Description of Embodiments

The present disclosure will be hereinafter described in detail.

The present disclosure is the secondary battery composition suitably used mainly for forming an electrode, electrolyte layer, or forming a separator for a secondary battery.

For example, a known method for forming an electrode or electrolyte layer for a sulfide-based solid-state battery includes applying and drying a slurry comprising sulfide-based solid electrolyte particles, a binder, and a solvent, and then pressing the slurry. To form a satisfactory electrode or electrolyte layer using this method, the selection of the binder and the solvent to be used in combination with the sulfide-based solid electrolyte particles is important. When the sulfide-based solid electrolyte particles are used, it is necessary to select a solvent that does not react with the sulfide-based solid electrolyte particles which limits the types of solvents that can be used. Moreover, to prepare a slurry using such a solvent, it is necessary to select a binder that dissolves in the solvent.

Thus, it is desirable to use a binder having suitable solubility in the solvent. However, known binders often have low solubility in the solvent. Therefore, such binders cannot be sufficiently dissolved in the slurry comprising the sulfide-based solid electrolyte particles, and thus, cannot sufficiently function as binders.

When polyvinylidene fluoride, a comparatively inexpensive common polymer, is used as the binder, gelation may occur in a slurry. A binder once gelates fails to provide a homogeneous slurry and consequently cannot function as a binder.

Such a gelation is most likely to occur in a slurry that uses a positive electrode active material containing lithium hydroxide. Some oxide-based solid electrolytes are presumably unstable to moisture, change to lithium hydroxide when reacting to moisture in the air, and become an alkaline component that causes gelation. Gelation has been known to occur even when producing a slurry used in the production of an electrode material, and many attempts have been made to improve it.

The present disclosure uses a fluorine-containing polymer as a binder having the structure originated from 1,2-difluoroethylene having satisfactory dissolution performance to obtain the secondary battery composition suitable for producing a battery.

The secondary battery composition of the present disclosure has excellent solid content improving property in dispersibility, stability, gelation property, and viscosity. Additionally, lower-resistivity of the electrode surface can be expected. Further, a lowboiling point solvent can be used, thereby, in the process of producing an electrode and the like, reducing a drying temperature and shortening a drying time, hence advantageous.

The fluorine-containing polymer used in the present disclosure is the polymer having the structure represented by the formula (1) below, and may be a homopolymer or a copolymer.

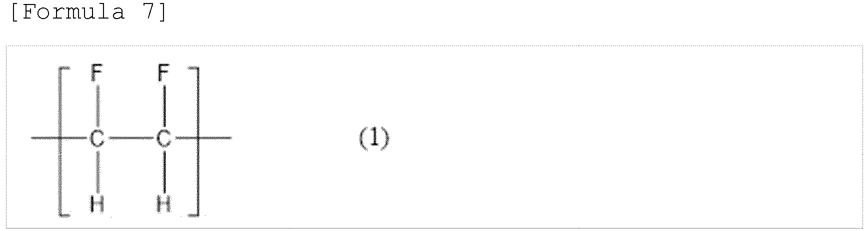

The structure represented by the above formula (1) is the structure obtained by polymerizing 1,2-difluoroethylene having the structure represented by formula (10) as a monomer.
[Formula 8]

FHC=CHF (10)

1,2-Difluoroethylene is a known compound and has been studied for use mostly as a refrigerant, but has not been much studied as a polymerizable monomer.

1,2-Difluoroethylene can provide a copolymer with other monomers by a general method. Further, the copolymerization ratio can be easily changed.

The fluorine-containing polymer is a polymer composed only of the structure represented by the above formula (1), or a copolymer having the structural unit represented by the above formula (1).

1,2-Difluoroethylene has the trans form (E-form) and the cis form (Z-form).

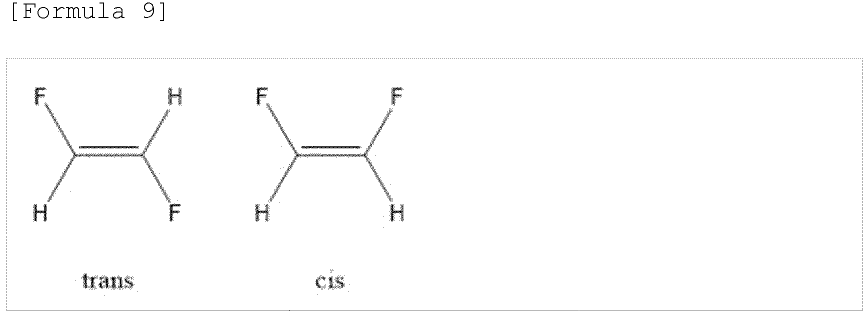

For this reason, the case where only the trans form is used as the source material, the case where only the cis form is used as the source material, and the case where the mixture of these is used as the source material cause different configurations. The fluorine-containing polymer may be any of these. Alternatively, the fluorine-containing polymer may be a mixture of these in any ratio.

The fluorine-containing polymer, when used as a copolymerizable polymer, preferably has the structural unit represented by the formula (2) below, in addition to the structural unit represented by the above formula (1). 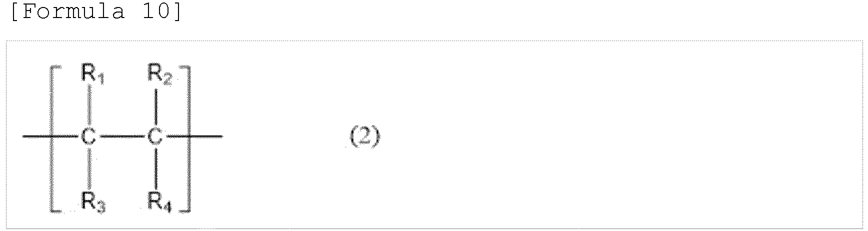 wherein R₁ is hydrogen, fluorine, a partly or wholly fluorinated hydrocarbon group having 5 or less carbon atoms, or an OR₅ group (R₅ group is a partly or wholly fluorinated hydrocarbon group having 5 or less carbon atoms); and R₂, R₃, R₄ are each independently hydrogen or fluorine.

Examples of the structural unit represented by the above formula (2) include the structure originated from an ethylene monomer with at least one hydrogen atom optionally substituted with fluorine, the structural unit originated from a propylene monomer with at least one hydrogen atom optionally substituted with fluorine, the structural unit originated from a butene monomer with at least one hydrogen atom optionally substituted with fluorine, and the structural unit originated from a pentene monomer with at least one hydrogen atom optionally substituted with fluorine. The fluorine-containing polymer of the present disclosure may use two or more copolymerizable structural units in combination.

Examples of the structure originated from an ethylene monomer with at least one hydrogen atom optionally substituted with fluorine include, specifically, vinylidene fluoride, tetrafluoroethylene (TFE), vinyl fluoride, and 1,1,2-trifluoroethylene.

Examples of the structural unit originated from a propylene monomer with at least one hydrogen atom substituted with fluorine include 1270, 1216, 1252, 1243, 1234, 1225, and 1252.

The structural unit originated from a butene monomer with at least one hydrogen atom optionally substituted with fluorine include 1390, 1381, 1372, 1363, 1354, 1345, 1336, 1327, and 1318.

Examples of the pentene monomer with at least one hydrogen atom optionally substituted with fluorine include R600, R600a, nonahydrofluoropentene, 1492, 1483, 1474, 1465, 1456, 1447, 1438, 1429, and perfluoropentene

These are ASHRAE numbers.

The structural unit originated from a propylene monomer with at least one hydrogen atom substituted with fluorine is particularly preferably ASHRAE numbers 1216 (hexafluoropropylene), 1225, 1234, 1243, and 1252. Examples such a structural unit suitably include those represented by the formulae (11) to (16) below. 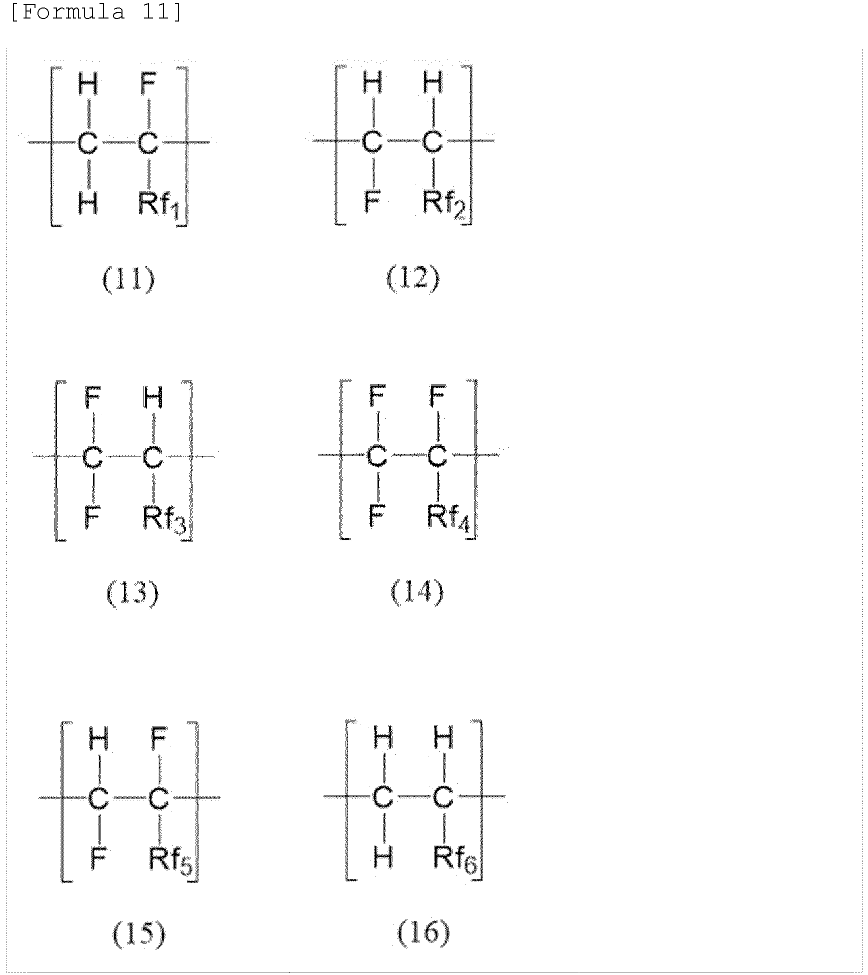 wherein Rf₁ to Rf₆ represent a fluoromethyl group having 1 to 3 fluorine.

Examples of the compound that provides the structure represented by the above formulae include, specifically, 2,3,3,3-tetrafluoropropene (HFO-1234yf), (Z or E-)1,3,3,3-tetrafluoropropene (HFO-1234ze), (Z or E-)1,2,3,3,3-pentafluoropropene (HFO-1225ye), (Z or E-)1,1,3,3,3-pentafluoropropene (HFO-1225zc) and (Z or E-)3,3,3-trifluoropropene (HFO-1243zf).

The structural unit represented by formula (2) may be 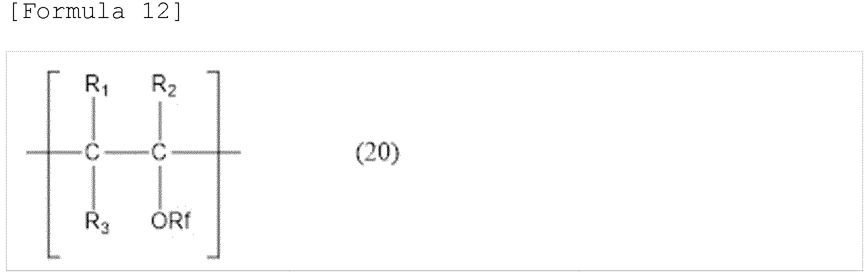 wherein R₁ to R₃ are selected from H and F, Rf is a fluorine-containing alkyl group having 1 to 6 carbon atoms.

The structural unit represented by the above formula (20) is the structural unit originated from a fluorinated vinyl ether compound. The fluorinated vinyl ether compound is not limited, and examples include perfluoromethylvinyl ether (PMVE) (formula (7)), perfluoro ethyl vinyl ether (formula (8)), and perfluoropropylvinyl ether (formula (9)).

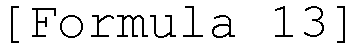

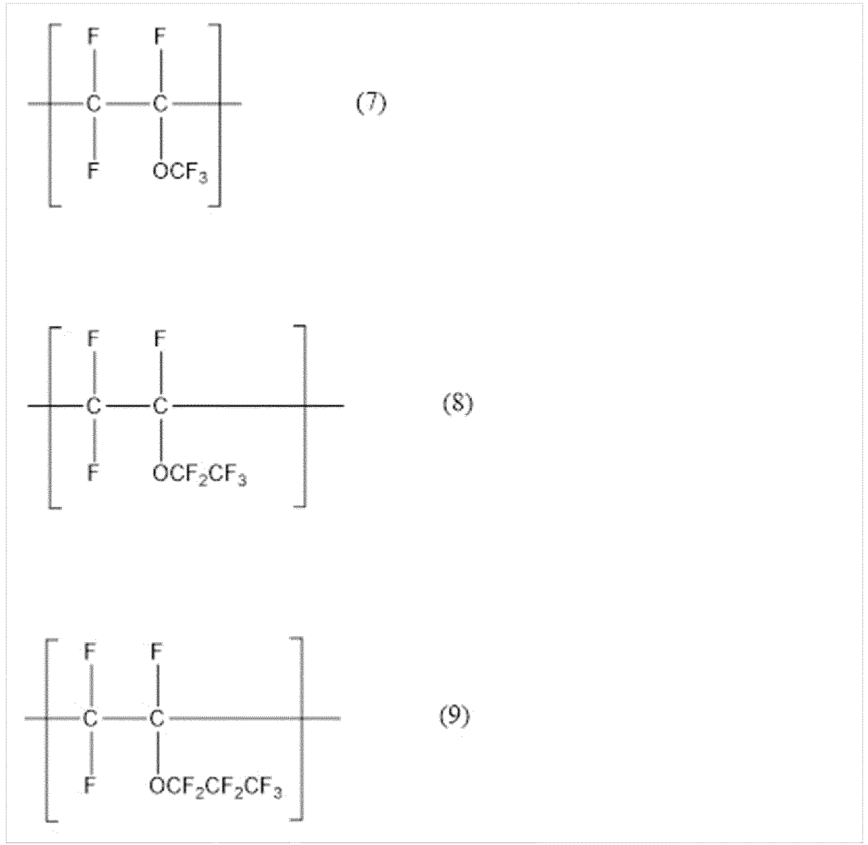

In the above copolymerizable polymers, the structural units particularly suitably usable among the structural units represented by formula (2) described above are the structural units represented by the formulae (3) to (8) below.

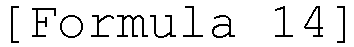

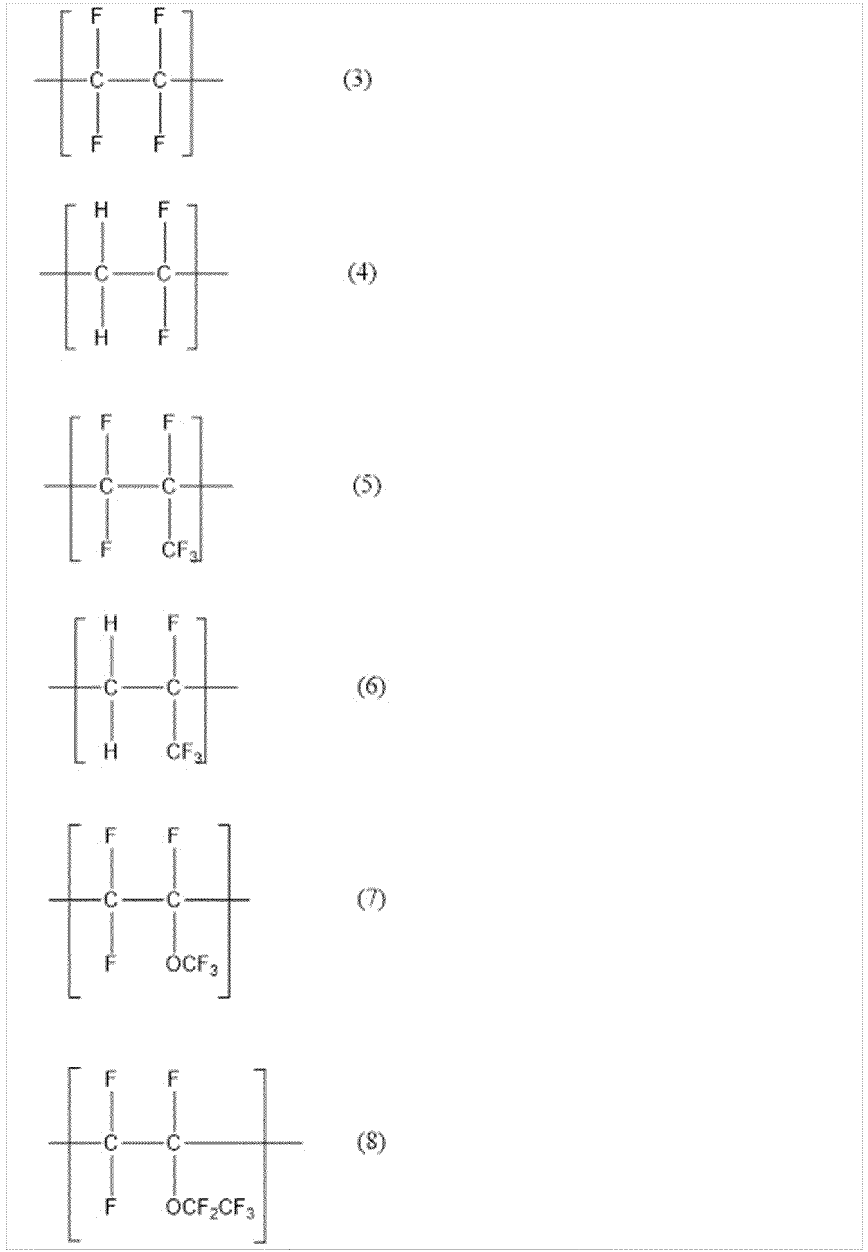

The structure represented by the above formula (3) is the structural unit originated from tetrafluoroethylene, and the structure represented by formula (4) is the structural unit originated from vinylidene fluoride.

Further, the structure represented by formula (5) is the structural unit originated from hexafluoropropylene (HFP), and the structure represented by formula (6) is the structural unit originated from CH₂ = CFCF₃.

The structure represented by formula (7) is the structural unit originated from perfluoro(methylvinyl ether). The structure represented by formula (8) is the structural unit originated from perfluoro(ethylvinyl ether).

When the fluorine-containing polymer is a copolymerizable polymer, the proportion of the structural unit represented by the above formula (1) is preferably 0.1 mol% or more and 99.9 mol% or less, more preferably 1 mol% or more and 99 mol% or less, and still more preferably 10 mol% or more and 99 mol% or less.

The composition of the fluorine-containing polymer can be measured using an NMR analyzer.

When the fluorine-containing polymer is a copolymerizable polymer, the proportion of the structural unit represented by the above formula (2) is preferably 0.1 mol% or more, and 99.9 mol% or less.

Some polymers, depending on the composition of the copolymers, may be hardly soluble in common solvents. For example, the case where TFE and the like are copolymerized applies to this. For this reason, the amount of TFE and the like to be used is preferably 60 mol% or less.

The fluorine-containing polymer may have a structural unit originated from a copolymerizable component other than the structural unit represented by the above formula (2). The copolymerizable component is not limited, and examples include chlorotrifluoroethylene, hexafluoroisobutene, ethylene, propylene, and alkyl vinyl ether.

The amount of a copolymerizable component other than the structural unit represented by the above formula (2) used is not limited but more preferably 99.9 mol% or less, still more preferably 99 mol% or less, and most preferably 97 mol% or less.

The fluorine-containing polymer preferably has a weight average molecular weight of 50,000 to 5,000,000. The weight average molecular weight within the above range is preferable in the point of resistance to thermal decomposition and slurry stability.

The upper limit is more preferably 3,000,000, and still more preferably 2,000,000. The lower limit is more preferably 80,000, and still more preferably 100,000. Additionally, the weight average molecular weight is still more preferably 120,000 or more because applicability depends on the molecular weight. The weight average molecular weight of the present disclosure is the value measured by gel permeation chromatography (GPC).

### (Polymerization method)

The fluorine-containing polymer of the present disclosure can be obtained by polymerizing a monomer composition, which is in part or in whole composed of the monomer represented by the formula (10) below.
[Formula 15]

FHC=CHF (10)

The compound represented by the above formula (10) is a known compound, which can be produced by, for example, the method described in Patent Literature 1.

While the method for producing the fluorine-containing polymer is not limited, it can be produced by any general polymerization method such as solution polymerization, suspension polymerization, emulsion polymerization and the like. Solvent, emulsifier, and initiator used in these polymerizations are not limited, and general known ones can be used.

The fluorine-containing polymer has excellent solubility in a solvent. The secondary battery composition of the present disclosure is preferably in the state in which the fluorine-containing polymer is dissolved in a solvent and forms a slurry.

The fluorine-containing polymer has satisfactory solubility in common solvents, thereby being particularly preferable from the viewpoint of costs. Examples of the common solvent capable of dissolving the fluorine-containing polymer include N-methyl-2-pyrrolidone (NMP), acetone, methyl ethyl ketone, tetrahydrofuran, N,N-dimethylformamide, dimethylacetamide (DMAC), and butyl acetate.

The solvent used in the present disclosure preferably comprises at least one compound selected from the group consisting of ester compounds, ketone compounds, amide compounds, aromatic compounds, aliphatic hydrocarbon compounds, ether compounds and carbonate compounds. Preferred is at least one compound selected from the group consisting of ester compounds, ketone compounds and amide compounds. More preferred is at least one compound selected from the group consisting of ketone compounds and amide compounds.

Examples of the ester compound include those represented by formula (21) below.
Formula (21): 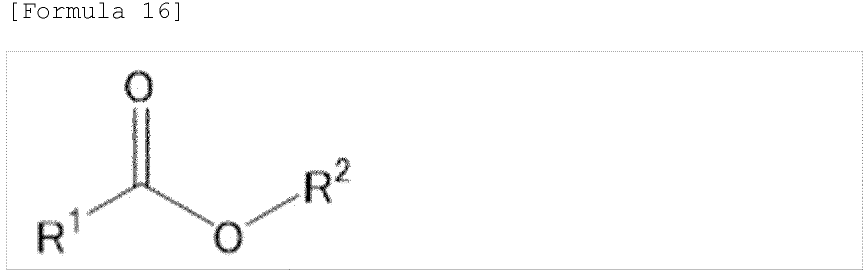 wherein R¹ and R² are independently H, a C₁ to C₁₀ linear or branched chain aliphatic group, or a C₆ to C₁₀ aromatic group.

In the above formula (21), R¹ and R² are independently H, a C₁ to C₁₀ linear or branched chain aliphatic group, or a C₆ to C₁₀ aromatic group. Examples of the aliphatic group include C₁ to C₁₀ alkyl groups or alkenyl group. Specifically, examples include a methyl group, an ethyl group, a propyl group, an isopropyl group, an n-butyl group, an isobutyl group, a tert-butyl group, a pentyl group, an isopentyl group, a neopentyl group, a hexyl group, a heptyl group, an octyl group, a nonyl group, a decyl group, a vinyl group, a propenyl group, and a butenyl group. Of these, a methyl group, an ethyl group, a propyl group, a butyl group and the like are preferable. Examples of the aromatic group include a phenyl group and a naphthyl group.

Examples of the ester compound include, specifically, ethyl butyrate, butyl butyrate, propyl propionate, butyl methacrylate, and ethyl acetate.

Examples of the ketone compound include those represented by formula (22) below.
Formula (22): 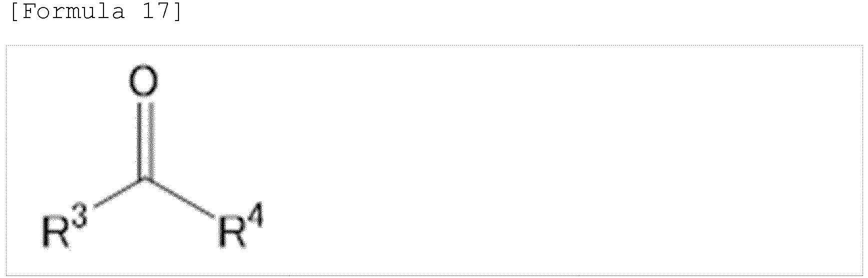 wherein R³ and R⁴ are independently H, a C₁ to C₁₀ linear or branched chain aliphatic group, or a C₆ to C₁₀ aromatic group.

In formula (22), R³ and R⁴ are independently H, a C₁ to C₁₀ linear or branched chain aliphatic group, or a C₆ to C₁₀ aromatic group. Examples of the aliphatic group preferably include C₁ to C₁₀ alkyl groups. Specifically, examples include a methyl group, an ethyl group, a propyl group, an isopropyl group, an n-butyl group, an isobutyl group, a tert-butyl group, a pentyl group, an isopentyl group, a neopentyl group, a hexyl group, a heptyl group, an octyl group, a nonyl group, and a decyl group. Of these, a methyl group or an ethyl group is preferable, and a methyl group is more preferable. Examples of the aromatic group include phenyl groups and naphthyl groups.

Examples of the ketone compound include, specifically, acetone and methyl ethyl ketone.

Examples of the amide compound include those represented by formula (23) or formula (24) below. Formula (23): 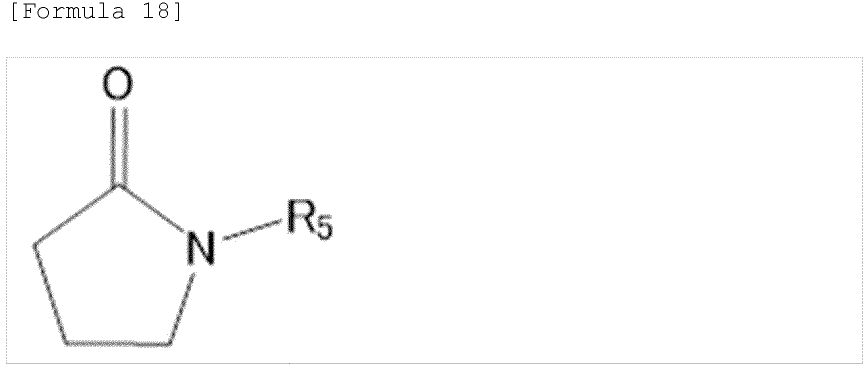 wherein R⁵ is H, a C₁ to C₁₀ linear or branched chain aliphatic group, or a C₆ to C₁₀ aromatic group. Formula (24): 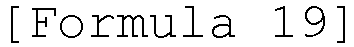 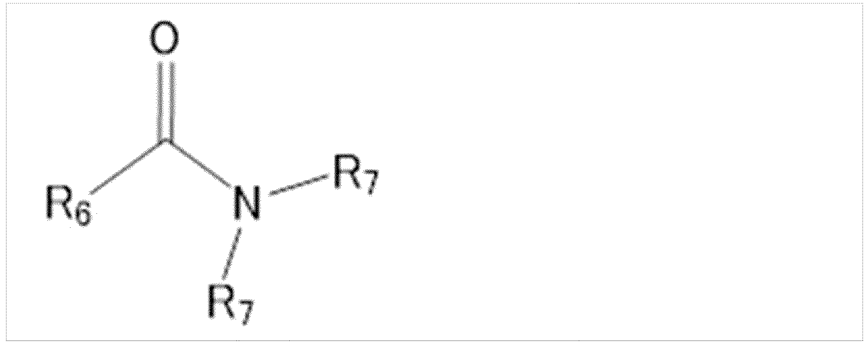 wherein R⁶ is H, a C₁ to C₁₀ linear or branched chain aliphatic group, and R⁷ is H, a C₁ to C₁₀ linear or branched chain aliphatic group, or a C₆ to C₁₀ aromatic group.

In formula (23) above, R⁵ is H, a C₁ to C₁₀ linear or branched chain aliphatic group, or a C₆ to C₁₀ aromatic group. Examples of the aliphatic group and the aromatic group are the same as those described in the R³ and R⁴ above.

In formula (24) above, R⁶ is H, a C₁ to C₁₀ linear or branched chain aliphatic group, R⁷ is H, a C₁ to C₁₀ linear or branched chain aliphatic group, or a C₆ to C₁₀ aromatic group. Two R⁷ may be same or different. Examples of the aliphatic group and the aromatic group are the same as those described in the R³ and R⁴ above.

In formulae (23) and (24) above, R⁵ to R⁷ are preferably each independently H, a methyl group or an ethyl group of the above.

Examples of the amide compound include, specifically, N-methyl-2-pyrrolidone, dimethylformamide, and dimethylacetamide.

In the present disclosure, when a sulfide-based solid electrolyte is used, a low-polarity solvent is preferably used. The use of a low-polarity solvent is preferable because the solvent is less likely to react with the sulfide-based solid electrolyte particles. As used herein, the low-polarity solvent is defined as a solvent with a dielectric constant of less than 20 at a frequency of 100 kHz. Still more preferably, it is less than 10,

Examples of the low-polarity solvent include, but are not limited to, n-octane, n-nonane, n-decane, n-butyl ether, diisopentyl ether, ethyl benzene, ethyl acetate, ethyl butyrate, butyl butyrate, propyl propionate, butyl methacrylate, dimethyl carbonate, diethyl carbonate, methyl phenyl ether, cyclopentyl methyl ether, ethylene carbonate, diphenyl ether, fluorobenzene, trifluoromethylbenzene, bistrifluoromethylbenzene, benzene, and thiols.

Of these, at least one solvent selected from the group consisting of propyl propionate, butyl methacrylate, ethyl acetate, ethyl butyrate, and butyl butyrate can be more suitably used. A solvent mixture of two or more of them may also be used.

When the fluorine-containing polymer dissolved in a solvent is used as the secondary battery composition, the polymer concentration may be adjusted according to the purpose of use below and is preferably 0.5 mass% or more and 90.0 mass% or less. The lower limit of the polymer concentration is more preferably 1.0 mass%, and still more preferably 2.5 mass%. The upper limit of the polymer concentration is more preferably 80.0 mass%, and still more preferably 75.0 mass%.

The concentration within this range can make a stable secondary battery composition slurry.

The secondary battery composition of the present disclosure has preferably a low water content, which is specifically preferably 1,000 ppm or less, more preferably 500 ppm or less, and still more preferably 100 ppm or less.

The secondary battery composition of the present disclosure may be used for an electrode of a solid-state battery, or for an electrode of a secondary battery comprising an electrolytic solution. Further, the secondary battery composition is also used for a solid electrolyte layer of a solid-state battery. Furthermore, the secondary battery composition is also used for a separator of a secondary battery. Components constituting an electrode and the like may be appropriately combined according to these purposes of use.

When the electrode is an electrode for a solid-state battery, an electrode active material and a solid electrolyte are further used; and when the electrode is an electrode of a secondary battery comprising an electrolytic solution, an electrode active material is further used. A conductive aid and other components may be optionally used.

The secondary battery composition of the present disclosure may be used as a slurry for a positive electrode or a slurry for a negative electrode. Further the secondary battery composition of the present disclosure may also be used as a slurry for forming a solid electrolyte layer. When the secondary battery composition is used as a slurry for an electrode, it further contains active material particles. When the secondary battery composition is used as a slurry for an electrode for a solid-state battery, it contains active material particles and a solid electrolyte. The active material particles may be a positive electrode active material or a negative electrode active material. The secondary battery composition of the present disclosure is more suitable for use as a slurry for a positive electrode that contains a positive electrode active material.

Hereinafter, each component for constituting an electrode will be described in detail.

### (Electrode active material)

When the secondary battery composition of the present disclosure is used as a slurry for a positive electrode, it contains a positive electrode active material. The positive electrode active material may be any known positive electrode active material of a secondary battery. In particular, the positive electrode active material is preferably a material that can occlude and release lithium ions.

The positive electrode active material is not limited as long as it is a material that can electrochemically intercalate and deintercalate lithium ions. Specifically, a material containing lithium and at least one transition metal is preferable, and examples include a lithium transition metal composite oxide, and a lithium-containing transition metal phosphate compound.

The transition metal in lithium transition metal composite oxide is preferably V, Ti, Cr, Mn, Fe, Co, Ni, Cu, and the like, and specific examples of the lithium transition metal composite oxide include lithium-cobalt composite oxides such as LiCoO₂, lithium-nickel composite oxides such as LiNiO₂, lithium-manganese composite oxides such as LiMnO₂, LiMn₂O₄, and Li₂MnO₃, and lithium transition metal composite oxides in which a part of the transition metal atoms to be the main constituent of these lithium transition metal composite oxides is substituted with other metals such as Al, Ti, V, Cr, Mn, Fe, Co, Li, Ni, Cu, Zn, Mg, Ga, Zr, Si, and the like. Specific examples of the lithium transition metal composite oxides substituted include LiNi_{0.5}Mn_{0.5}O₂, LiNi₀.₈₅Co_{0.10}Al₀.₀₅O₂, LiNi_{0.82}Co_{0.15}Al_{0.03}O₂, LiNi_{0.80}Co_{0.15}Al_{0.05}O₂, LiNi_{1/3}Co_{1/3}Mn_{1/3}O₂, LiNi_{0.80}Co_{0.10}Mn_{0.10}O₂, LiMn_{1.8}Al_{0.2}O₄, LiMn_{1.5}Ni_{0.5}O₄, and Li₄Ti₅O₁₂. In the positive electrode active material containing Ni, the larger a Ni proportion is, the higher a capacity of the positive electrode active material is, whereby the further improvement in a battery capacity can be expected.

The transition metal in lithium-containing transition metal phosphate compound is preferably V, Ti, Cr, Mn, Fe, Co, Ni, Cu, and the like, and specific examples of the lithium-containing transition metal phosphate compound include iron phosphates such as LiFePO₄, Li₃Fe₂(PO₄)₃, and LiFeP₂O₇, cobalt phosphates such as LiCoPO₄, and lithium-containing transition metal phosphate compounds in which a part of the transition metal atoms to be the main constituent of these lithium-containing transition metal phosphate compounds is substituted with other metals such as Al, Ti, V, Cr, Mn, Fe, Co, Li, Ni, Cu, Zn, Mg, Ga, Zr, Nb, Si, and the like.

From the viewpoint of high voltage, high energy density, or charge and discharge cycle characteristics, LiCoO₂, LiNiO₂, LiMn₂O₄, LiNi_{0.82}Co_{0.15}Al_{0.03}O₂, LiNi_{0.80}Co_{0.15}Al_{0.05}O₂, LiNi_{1/3}Co_{1/3}Mn_{1/3}O₂, and LiFePO₄ are particularly preferable.

Alternatively, a positive electrode active material to the surface of which a substance of different composition from the substance to be the main constituent of the positive electrode active material is adhered may also be used. Examples of the surfaceadhering substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate.

These surface-attached substances may be adhered to the positive electrode active material surface by, for example, a method in which a surface-attached substance is dissolved or suspended in a solvent, added to a positive electrode active material by impregnation, and dried, a method in which a surface-attached substance precursor is dissolved or suspended in a solvent, added to a positive electrode active material by impregnation, and then reacted by heating and the like, or a method in which a surface-attached substance is added to a positive electrode active material precursor and simultaneously fired.

The surface-attached substance is used in an amount of preferably 0.1 ppm, more preferably 1 ppm, and still more preferably 10 ppm as the lower limit, whereas in an amount of preferably 20%, more preferably 10%, and still more preferably 5% as the upper limit, in terms of mass, based on the positive electrode active material. The surface-attached substance can suppress the oxidation reaction of a nonaqueous electrolytic solution at the positive electrode active material surface and improve battery life, however an adhered amount that is excessively small fails to exhibit the effects sufficiently, whereas an adhered amount that is excessively large blocks lithium ions from passing through and thus may increase the resistance.

The shape of the positive electrode active material particle used is the conventionally used shapes such as block, polyhedron, sphere, oval, plate, needle, and column. Of these, the positive electrode active material particle is preferably composed of secondary particles in each of which primary particles aggregate and the secondary particle is preferably in the shape of sphere or oval. Typically, the active material in an electrode expands and contracts as an electrochemical element is charged and discharged, and therefore degradation such as the active material breakage and the conductive path disruption are prone to occur due to the stress. For this reason, the active material composed of secondary particles in each of which primary particles aggregate, rather than the single-particle active material composed only of primary particles, is preferable because it mitigates the stress from the expansion and contraction and prevents the degradation. Further, spherical or oval shape particles, rather than particles that are axially oriented such as a plate shape, are preferable because such particles are less oriented when molding an electrode with little expansion and contraction of the electrode during charging and discharging and are also likely to be mixed homogeneously when mixed with a conductive aid when an electrode is prepared.

The tap density of a positive electrode active material is typically 1.3 g/cm³ or more, preferably 1.5 g/cm³ or more, still more preferably 1.6 g/cm³ or more, and most preferably 1.7 g/cm³ or more. When a tap density of a positive electrode active material is below the lower limit, an amount of a dispersion medium required may increase, and amounts of a conductive aid and a binder required may also increase, a filling factor of the positive electrode active material into a positive electrode active material layer may be restricted, and a battery capacity may be restricted, during the formation of the positive electrode active material layer. Use of a metal composite oxide powder having a high tap density can form a high-density positive electrode active material layer. Generally, the higher a tap density is, the better, and thus there is no upper limit, but the tap density is typically 2.5 g/cm³ or less, and preferably 2.4 g/cm³ or less, because when a tap density is excessively high, lithium ion diffusion with a nonaqueous electrolytic solution as a medium is controlled in the positive electrode active material layer, thereby likely reducing load characteristics.

A tap density of a positive electrode active material is defined by passing the material through a sieve having an opening size of 300 µm, dropping the sample into a 20 cm³-tapping cell to fill the cell volume, then tapping 1,000 times with a stroke length of 10 mm using a powder density meter (for example, tap denser; Seishin Enterprise Co., Ltd.), and determining a density based on the volume and the sample weight at that time as the tap density.

The median diameter d50 of positive electrode active material particles (secondary particle size when primary particles aggregate and form secondary particles) is typically 0.1 µm or more, preferably 0.5 µm or more, more preferably 1 µm or more, and most preferably 3 µm or more, and typically 20 µm or less, preferably 18 µm or less, more preferably 16 µm or less, and most preferably 15 µm or less. When a median diameter d50 is below the lower limit, a high bulk density product may not be obtained, whereas when such a diameter is more than the upper limit, lithium diffusion in particles takes time deteriorating battery performance, and during preparation of a positive electrode of a battery, that is, when a slurry prepared using a positive electrode active material and a conductive aid or a binder with a solvent is applied into a thin film, problems may arise such as drawing lines. When two or more positive electrode active materials having different median diameters d50 are mixed, filling properties during the positive electrode preparation may also be further improved.

The median diameter d50 in the present disclosure is measured using a known laser diffraction/scattering particle size distribution analyzer. When LA-920; HORIBA is used as the particle size distribution analyzer, the measurement is conducted using an aqueous solution of 0.1 mass% sodium hexametaphosphate as a dispersion medium to be used during measurement and setting a measurement refractive index to 1.24 after 5-minute ultrasonic dispersion.

When primary particles aggregate and form secondary particles, the average primary particle size of a positive electrode active material is typically 0.01 µm or more, preferably 0.05 µm or more, still more preferably 0.08 µm or more, and most preferably 0.1 µm or more, and is typically 3 µm or less, preferably 2 µm or less, still more preferably 1 µm or less, and most preferably 0.6 µm or less. An average primary particle size more than the above upper limit may make it difficult to form spherical shape secondary particles, adversely affect powder filling properties, significantly decrease a specific surface area, thereby likely increasing the probability of deteriorating battery performance such as output characteristic. Conversely, an average primary particle size below the lower limit may typically pose problems such as poor reversibility of charging and discharging due to underdeveloped crystal. The primary particle size is measured by observation using a scanning electron microscopy (SEM). Specifically, the primary particle size is determined, using a photo of 10,000 magnifications, by determining the longest value of the intercepts by the left and right boundary lines of primary particles for a straight line in a horizontal direction for optional 50 primary particles, and taking the average value thereof.

The BET specific surface area of a positive electrode active material is 0.2 m²/g or more, preferably 0.3 m²/g or more, and still more preferably 0.4 m²/g or more, and 4.0 m²/g or less, preferably 2.5 m²/g or less, and still more preferably 1.5 m²/g or less. A BET specific surface area smaller than this range may likely deteriorate battery performance, whereas a BET specific surface area larger than this range less likely increases a tap density and a problem of applicability may arise during the positive electrode active material formation.

The BET specific surface area is defined by the value obtained, using a surface area meter (for example, fully automated BET specific surface area measuring device; OKURA RIKEN K.K.) by preliminary drying a sample at 150°C for 30 minutes under nitrogen flow and measuring the sample using a nitrogen-helium mixed gas precisely adjusted so that a value of nitrogen relative pressure to atmospheric pressure is 0.3 by the nitrogen adsorption BET single point method using a gas flow method.

The method for producing a positive electrode active material used is a common method as the method for producing an inorganic compound. There are various methods conceivable for preparing a spherical or oval shape active material, and examples include a method in which a transition metal source material such as transition metal nitrate, and sulfate, and optionally other element source materials are dissolved or dispersed by grinding in a solvent such as water to prepare and collect spherical shape precursors by adjusting pH while stirring, the precursors are optionally dried and then fired at a high temperature by adding a Li source such as LiOH, Li₂CO₃, and LiNO₃ thereby to obtain an active material, a method in which a transition metal source material such as transition metal nitrate, sulfate, hydroxide, and oxide, and optionally other element source materials are dissolved or dispersed by grinding in a solvent such as water to form spherical or oval shape precursors by dry-molding using a spray dryer or the like, and the precursors are fired at a high temperature by adding a Li source such as LiOH, Li₂CO₃, and LiNO₃ thereby to obtain an active material, and a method in which a transition metal source material such as transition metal nitrate, sulfate, hydroxide, and oxide, a Li source such as LiOH, Li₂CO₃, and LiNO₃, and optionally other element source materials are dissolved or dispersed by grinding in a solvent such as water to form spherical or oval shape precursors by dry-molding using a spray dryer or the like, and the precursors are fired at a high temperature thereby to obtain an active material.

The positive electrode active material may be used alone, or two or more active materials having different compositions or different powder properties may be used in optional combinations and ratios.

When the secondary battery composition of the present disclosure is used as a slurry for a negative electrode, it contains a negative electrode active material. The negative electrode active material may be any known negative electrode active material of a secondary battery.

Examples of the negative electrode active material include, but are not limited to, any that is selected from lithium metal; those containing carbonaceous materials such as artificial graphite, graphite carbon fibers, resin calcination carbon, pyrolytic vapor-grown carbon, coke, mesocarbon microbeads (MCMBs), furfuryl alcohol resin calcination carbon, polyacene, pitch-based carbon fibers, vapor-grown carbon fibers, natural graphite, and non-graphitizing carbon; silicon-containing compounds such as silicon and silicon alloys; Li₄Ti₅O₁₂; and the like; or a mixture of two or more of them. Of these, those at least partially containing a carbonaceous material, or a silicon-containing compound can be particularly suitably used.

In the present disclosure, the amount of an active material particles to be blended in the slurry for an electrode based on the total solid content of the slurry is preferably 1 to 99.0 mass%. The lower limit is more preferably 10 mass%, and still more preferably 20 mass%. The upper limit is more preferably 98 mass%, and still more preferably 97 mass%. When blended in the above proportion, the active material is contained in the proportion described above in the active material layer.

### (Conductive aid)

In the present disclosure, the slurry for an electrode may further optionally contain a conductive aid.

While the conductive aid used herein is not limited as long as it can improve the conductivity in the target electrode, and examples include carbon black such as acetylene black and ketjen black; carbon fibers such as multi-walled carbon nanotubes, single-walled carbon nanotubes, carbon nanofibers, and vapor-grown carbon fibers (VGCFs); and metal powders such as SUS powder and aluminum powder.

When a conductive aid is used, the conductive aid is used so as to be contained, in the solid content of the slurry for an electrode, typically 0.01 mass% or more, preferably 0.1 mass% or more, more preferably 0.5 mass% or more, and typically 50 mass% or less, preferably 30 mass% or less, and more preferably 15 mass% or less. A content lower than this range may cause insufficient conductivity. Conversely, a content higher than this range may reduce a battery capacity.

The slurry may contain a material other than the materials mentioned above. However, the content of the material is preferably 8 mass% or less, and more preferably 4 mass% or less, based on the volume of the entire slurry taken as 100 mass%.

### (Solid electrolyte)

The solid electrolyte used in the secondary battery composition of the present disclosure may be a sulfide-based solid electrolyte or an oxide-based solid electrolyte. In particular, when a sulfide-based solid electrolyte is used, flexibility is imparted, hence advantageous.

Examples of the sulfide-based solid electrolyte include a lithium-ion conducting inorganic solid electrolyte satisfying the composition shown in the following formula (1).

Liₐ₁M_{b1}P_{c1}S_{d1}Aₑ₁ (1)

wherein M is an element selected from B, Zn, Sn, Si, Cu, Ga, Sb, Al and Ge. A is an element selected from I, Br, Cl and F. a1 to e1 are the composition ratio of each element, a1:b1:c1:d1:e1 satisfies 1 to 12:0 to 5:1:2 to 12:0 to 10. a1 is preferably 1 to 9, and more preferably 1.5 to 7.5. b1 is preferably 0 to 3, and more preferably 0 to 1. d1 is preferably 2.5 to 10, and more preferably 3.0 to 8.5. e1 is preferably 0 to 5, and more preferably 0 to 3.

Preferably, the sulfide-based solid electrolyte contains lithium in the present disclosure. The lithium-containing sulfide-based solid electrolyte is used in solid-state batteries that use lithium ions as a carrier and is especially preferable in the point of being an electrochemical device having a high energy density.

The composition ratio of each element can be controlled by adjusting the amounts of raw material compounds to be blended in the production of a sulfide-based solid electrolyte as described below.

The sulfide-based solid electrolyte may be amorphous (glass) or crystallized (glass ceramics), or only a part thereof may be crystallized. For example, Li-P-S glass containing Li, P and S, or Li-P-S glass ceramics containing Li, P and S can be used.

The sulfide-based solid electrolyte can be produced by the reaction of at least two or more source materials from, for example, lithium sulfide (Li₂S), phosphorus sulfide (for example, phosphorus pentasulfide (P₂S₅)), simple substance phosphorus, simple substance sulfur, sodium sulfide, hydrogen sulfide, lithium halide (for example, LiI, LiBr, LiCl) and sulfides of the elements represented by M above (for example, SiS₂, SnS, GeS₂).

Specific examples of the sulfide-based solid electrolyte include combinations of source materials below. Examples include Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, and Li₁₀GeP₂S₁₂. The mixture ratio of each source material is irrelevant.

Preferably, the oxide-based solid electrolyte is a compound that contains an oxygen atom (O), has the ion conductivity of metals belonging to the Group 1 or 2 of the periodic table, and has electron-insulating property.

Specific examples of the compound include LiₓₐLa_{ya}TiO₃ [xa = 0.3 to 0.7, ya = 0.3 to 0.7] (LLT), Li_{xb}La_{yb}Zr_{zb}M^{bb}_{mb}O_{nb} (M^{bb} is at least one or more elements of Al, Mg, Ca, Sr, V, Nb, Ta, Ti, Ge, In, and Sn, xb satisfies 5 ≤ xb ≤ 10, yb satisfies 1 ≤ yb ≤ 4, zb satisfies 1 ≤ zb ≤ 4, mb satisfies 0 ≤ mb ≤ 2, and nb satisfies 5 ≤ nb ≤ 20), Li_{xc}B_{yc}M^{cc}_{zc}O_{nc}(M^{cc} is at least one or more elements of C, S, Al, Si, Ga, Ge, In, and Sn, xc satisfies 0 ≤ xc ≤5, yc satisfies 0 ≤ yc ≤ 1, zc satisfies 0 ≤ zc ≤ 1, and nc satisfies 0 ≤ nc ≤ 6), Li_{xd} (Al,Ga)_{yd}(Ti,Ge)_{zd}Si_{ad}P_{md}O_{nd} (provided that 1 ≤ xd ≤ 3, 0 ≤ yd ≤ 1, 0 ≤ zd ≤2, 0 ≤ ad ≤ 1, 1 ≤ md ≤ 7, 3 ≤ nd ≤ 13, Li₍₃₋₂ₓₑ₎M^{ee}ₓₑD^{ee}O (xe represents a number of 0 or more and 0.1 or less, and M^{ee} represents a bivalent metal atom. D^{ee} represents a halogen atom or in combination of two or more halogen atoms), Li_{xf}Si_{yf}O_{zf} (1 ≤ xf ≤ 5, 0 < yf ≤ 3, 1 ≤ zf ≤ 10), Li_{xg}S_{yg}O_{zg} (1 ≤ xg ≤ 3, 0 < yg ≤ 2, 1 ≤ zg ≤ 10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w is w < 1), Li_{3.5}Zn_{0.25}GeO₄ having LISICON (Lithium super ionic conductor)-type crystal structure, La_{0.55}Li_{0.35}TiO₃ having perovskite-type crystal structure, LiTi₂P₃O₁₂ having NASICON (Natrium super ionic conductor)-type crystal structure, Li_{1+xh+yh}(Al,Ga)ₓₕ(Ti,Ge)₂₋ₓₕSi_{yh}P_{3-yh}O₁₂ (provided that 0 ≤ xh ≤ 1, 0 ≤ yh ≤ 1), and Li₇La₃Zr₂O₁₂ (LLZ) having garnet-type crystal structure. Further, a ceramic material in which an element in LLZ is substituted is also known. It is preferred to employ those containing at least one element selected from the group consisting of Mg, Al, Si, Ca (calcium), Ti, V (vanadium), Ga (gallium), Sr, Y (yttrium), Nb (niobium), Sn (tin), Sb (antimony), Ba (barium)), Hf (hafnium), Ta (tantalum), W (tungsten), Bi (bismuth), and lanthanoid. More preferred is an LLZ-based ceramic material in which at least one element of Mg (magnesium) and A (A is at least one element selected from the group consisting of Ca (calcium), Sr (strontium), and Ba (barium)) in LLZ is substituted. A phosphorus compound containing Li, P, and O is also desirable. Examples include lithium phosphate (Li₃PO₄), LiPON in which a part of the oxygen in lithium phosphate is substituted with nitrogen, and LiPOD¹ (D¹ is at least one selected from Ti, V, Cr, Mn, Fe, Co, Ni, Cu, Zr, Nb, Mo, Ru, Ag, Ta, W, Pt, and Au). LiA¹ON (A¹ is at least one selected from Si, B, Ge, Al, C, and Ga) and the like is also used preferably.

The oxide-based solid electrolyte preferably contains lanthanum. The oxide-based solid electrolyte containing lanthanum is particularly preferable in the point of having satisfactory Li-ion conductivity.

The oxide-based solid electrolyte is preferably garnet-type ion conducting oxide. The selection of oxide having such a structure is preferable in the point of having satisfactory Li-ion conductivity.

While the volume average particle size of a solid electrolyte is not limited, it is preferably 0.01 µm or more, and more preferably 0.03 µm or more. The upper limit of the volume average particle size is preferably 100 µm or less, and more preferably 50 µm or less.

The average particle size of solid electrolyte particles is measured by the following procedures. Using water (heptane when unstable in water), solid electrolyte particles are diluted in a 20 ml sample bottle to prepare a 1 mass% dispersion. The diluted dispersed sample is irradiated with 1 kHz ultrasonic for 10 minutes and immediately used for the test. Using a laser diffraction/scattering particle size distribution analyzer LA-920 (HORIBA, Ltd.), data of the dispersion sample in a quartz cell for measurement is captured 50 times at a temperature of 25°C to obtain a volume average particle size. For other detail conditions and the like, the description in JISZ8828:2013 "Particle size analysis - dynamic light scattering" is optionally referenced. Five samples are prepared per particle size level, and the average thereof is employed.

The content of a solid electrolyte in the solid component in a solid electrolyte composition is preferably 3 mass% or more, more preferably 4 mass% or more, particularly preferably 5 mass% or more, at an electrode in 100 mass% of the solid component, considering the reduction of interfacial resistance and the retention of the reduced interfacial resistance when used in a solid-state secondary battery. The upper limit of the content of a solid electrolyte is, from the same viewpoint, preferably 99 mass% or less, more preferably 90 mass% or less, and particularly preferably 80 mass% or less. In the solid electrolyte layer interposed between the positive electrode and the negative electrode, it is preferably 50 mass% or more, more preferably 60 mass% or more, and particularly preferably 70 mass% or more. The upper limit of the content of a solid electrolyte is, from the same viewpoint, preferably 99.9 mass% or less, more preferably 99.8 mass% or less, and particularly preferably 99.7 mass% or less. The solid electrolyte may be used alone, or 2 or more of them may be used in combination. In the present description, the solid content (solid component) refers to the component that does not disappear as volatilizes or evaporates when drying process is conducted at 170°C for 6 hours under nitrogen atmosphere. Typically, the solid content refers to components other than the above dispersion medium.

The content of a solvent, when a total mass of the slurry is 100 mass%, is preferably 10 mass% or more and 90 mass% or less. When a content of a solvent is less than 10 mass%, the binder, an active material, and the like are not dissolved in the solvent because the content of the solvent is excessively low, likely disturbing the formation of a layer forming a secondary battery. Conversely, when a content of a solvent is more than 90 mass%, a weight (application) may be difficult to control because the content of the solvent is excessively high. The content of a solvent, when a total mass of the slurry is 100 mass%, is more preferably 20 mass% or more and 70 mass% or less, and still more preferably 25 mass% or more and 65 mass% or less.

It is particularly preferable for the slurry to include 0.1 parts by mass or more and 9.5 parts by mass or less of the above fluorine-containing polymer, which is a binder, based on a total solids content of 100 parts by mass in the slurry. If the amount of the binder is excessively small, when an electrode is formed, the adhesion in the electrode layers as well as the adhesion between a negative electrode layer and a current collector may become poor, which may make handling of the electrode difficult. If the amount of the binder is excessively large, the resistance of the electrode may increase, and a solid-state battery with sufficient performance may not be obtained.

In the present disclosure, in the process of preparing the slurry, the amount of solids (the electrode active material, the solid electrolyte, and the binder) in the solvent is, for example, such that the solids content in the slurry is 30% by mass or more and 75% by mass or less, although not limited thereto. When the solids content falls in this range, an electrode or a solid electrolyte layer can be produced more easily. The lower limit of the solids content is more preferably 50 mass% or more, and the upper limit of the solids content is more preferably 70 mass% or less.

In the process of preparing the slurry, the above-mentioned components are mixed to form a slurry. The order of mixing the components is not limited, and the components may be added to the solvent and mixed. However, from the viewpoint of obtaining a slurry in which the binder is dissolved, it is preferable to mix the components using the following method.

In the process of preparing the slurry, it is desirable to prepare a binder solution by dissolving the binder in the solvent in advance, followed by mixing with other materials.

In the present disclosure, the slurry is preferably prepared using the following procedures.
(1) The binder described above is added to a solvent to obtain a binder solution containing the binder;
(2) for forming a slurry for an electrode, the binder solution obtained in (1) is added to the solvent together with the separately prepared positive electrode active material or negative electrode active material and optionally a solid electrolyte, and the solution is subjected to stirring treatment to obtain a "slurry for an electrode" in which the active material, binder and the like are dissolved in the solvent. The solvent is further added and the slurry is subjected to dispersion treatment using a stirrer or the like to prepare a "slurry for an electrode" having a predetermined viscosity while the electrode active material, the solid electrolyte, and the binder are highly dispersed in the solvent. In the step (2), the slurry may be a slurry to which a conductive aid is optionally added; and
(3) for forming a slurry for a solid electrolyte layer, the binder solution obtained in (1) is added to the solvent together with a separately prepared solid electrolyte, and the solution is subjected to dispersion treatment using a stirrer or the like to obtain a "slurry for a solid electrolyte layer" in which the solid electrolyte and the binder are highly dispersed in the solvent. The solvent is further added and the slurry is subjected to dispersion treatment using a stirrer or the like to prepare a "slurry for a solid electrode layer" having a predetermined viscosity in which the solid electrolyte and the binder are highly dispersed in the solvent. In the step (3), the slurry may be a slurry to which a conductive aid is optionally added.

By thus adding stepwise the binder, the electrode active material and/or the solid electrolyte, and sequentially subjecting them to the dispersion treatment, it is possible to easily obtain a slurry in which the components are highly dispersed in the solvent. Similarly, when an optional component (such as a conductive aid) other than these components is to be added, it is preferable to add the component and sequentially subject the mixture to the dispersion treatment.

It should be noted, however, that a slurry can also be obtained by adding the binder, the electrode active material, the solid electrolyte, and as well as an optional component to the solvent at once, and subjecting the mixture to the dispersion treatment at once.

The form of dispersion treatment may be, for example, the stirrer as described above. Other examples include dispersion with a homogenizer.

In the process of preparing the slurry, the mixture ratio of the binder, the electrode active material and/or the solid electrolyte may be any known mixture ratio that allows each of the formed layers to function appropriately.

The slurry can be used to form an electrode for a secondary battery and/or an electrolyte layer for a solid-state battery.

While the method for producing an electrode for a secondary battery is not limited, it may be produced by the following steps: (1) preparing a substrate; (2) preparing a slurry; and (3) applying the slurry to form an electrode for a secondary battery.

The steps (1) to (3) will be hereinafter described in order.

### Step (1): preparing a substrate

The substrate used herein is not limited as long as it has a flat surface such that the slurry can be applied thereto. The substrate may have a plate shape or a sheet shape. Alternatively, the substrate may be prepared in advance, or may be a commercial substrate.

The substrate used herein may be a substrate used in a secondary battery after the formation of the electrode for a secondary battery and/or an electrolyte layer for a solid-state battery, or may be a substrate not used as a material for a secondary battery. Examples of the substrate used in a secondary battery include electrode materials such as a current collector; and materials for solid electrolyte layers such as a solid electrolyte membrane. The electrode for a secondary battery and/or an electrolyte layer for a solid-state battery obtained using the slurry of the present disclosure may be used as a substrate, and additionally, an electrode for a secondary battery and/or an electrolyte layer for a solid-state battery may be formed on the substrate.

Examples of the substrate not used as a material for a secondary battery include substrates for transferring such as a transfer sheet and a transfer substrate. The electrode for a secondary battery and/or an electrolyte layer for a solid-state battery formed on a transfer substrate may be bonded by hot pressing or the like to the electrode for a secondary battery and/or the electrolyte layer for a solid-state battery, and then the transfer substrate may be peeled off to form an electrode for a secondary battery on the solid electrolyte layer. The electrode for a secondary battery formed on a transfer substrate may be bonded by hot pressing or the like to a current collector, and then the transfer substrate may be peeled off to form an electrode for a secondary battery on the current collector for an electrode.

### Step (2): preparing a slurry

This step can be conducted according to the method of preparing the slurry described above.

### Step (3): applying the slurry to form an electrode for a secondary battery or an electrolyte layer for a solid-state battery

In this step, the slurry is applied to at least either one of the surfaces of the substrate to form an electrode for a secondary battery or an electrolyte layer for a solid-state battery. The electrode for a secondary battery or an electrolyte layer for a solid-state battery may be formed on only one surface of the substrate or on both surfaces of the substrate.

The slurry application method, drying method, and the like may be selected appropriately. Examples of the application method include spraying, screen printing, doctor blade, bar coating, roll coating, gravure printing, and die coating methods.

Examples of the drying method include vacuum drying, heat drying, and vacuum heat drying. The conditions for vacuum drying or heat drying are not specifically restricted, and may be adjusted appropriately.

While the amount of the slurry to be applied depends on the composition of the slurry, the purpose of the target electrode for a secondary battery, and the like, it may be about 5 to 30 mg/cm² on a dry basis. The thickness of the electrode for a secondary battery may be about 10 to 250 µm, although not limited thereto.

The present disclosure also provides an electrode for a secondary battery, comprising an active material layer containing a polymer comprising the structural unit represented by formula (1) and an active material. For using as an electrode for a solid-state secondary battery, the active material layer further contains a solid electrolyte.

The electrode for a secondary battery may comprise a current collector and a lead connected to the current collector, in addition to the active material layer.

While the thickness of the active material layer used herein depends on the purpose of the target secondary battery and the like, it is preferably 10 to 250 µm, particularly preferably 20 to 200 µm, and most preferably 30 to 150 µm.

The current collector used herein is not limited as long as it functions to collect electric current in the active material layer.

Examples of materials of a positive electrode current collector include aluminum, SUS, nickel, iron, titanium, chromium, gold, platinum, and zinc, with aluminum and SUS being preferable. Examples of shapes of the positive electrode current collector include a foil shape, a plate shape, and a mesh shape, with the foil shape being preferable.

When the binder content in the positive electrode for a secondary battery according to the present disclosure is 0.5 to 10 mass% based on the positive electrode for a secondary battery (preferably the electrode active material layer), excellent adhesion is exhibited, and the secondary battery formed using the positive electrode exhibits high output.

The negative electrode current collector used herein is not limited as long as it functions to collect electric current in the negative electrode active material layer.

Examples of materials of a negative electrode current collector include chromium, SUS, nickel, iron, titanium, copper, cobalt, and zinc, with copper, iron, and SUS being preferable. Examples of shapes of the negative electrode current collector include a foil shape, a plate shape, and a mesh shape, with the foil shape being preferable.

When the binder content in the negative electrode for a secondary battery according to the present disclosure is 0.5 to 10 mass% based on the negative electrode for a secondary battery (preferably the electrode active material layer), excellent adhesion is exhibited, and the sulfide-based solid-state battery obtained using the negative electrode exhibits high output.

The present disclosure also provides a solid electrolyte layer comprising a polymer comprising the structural unit represented by formula (1) and a solid electrolyte. The solid electrolyte to be used may be the solid electrolyte described above.

The secondary battery composition of the present disclosure can also be used as a slurry for a separator. The present disclosure also provides a separator for a secondary battery, comprising a polymer comprising the structural unit represented by formula (1) above.

Hereinafter, the separator will be described in detail.

The separator of the present disclosure is preferably composed of a porous substrate, and a composite porous membrane formed on the porous substrate. The composite porous membrane preferably comprises the fluorine-containing polymer and at least one inorganic particle selected from the group consisting of metal oxide particle and metal hydroxide particle. The composite porous membrane preferably further comprises organic particles.

The content of the fluorine-containing polymer is preferably 50 mass% or less in the composite porous membrane.

When such a content is more than 50 mass%, the porosity in the composite porous membrane is too low whereby the ion permeation function as a separator may be failed.

The content of the fluorine-containing polymer is preferably 1 mass% or more in the composite porous membrane in the point of likely causing insufficient adhesion among inorganic particles and notably reducing mechanical properties of the composite porous membrane.

The content of the fluorine-containing polymer in the composite porous membrane is more preferably 45 mass% or less, still more preferably 40 mass% or less, more preferably 2 mass% or more, still more preferably 3 mass% or more, and particularly preferably 4 mass% or more.

The composite porous membrane comprises at least one inorganic particle selected from the group consisting of metal oxide particle and metal hydroxide particle. The content of the inorganic particle in the composite porous membrane is preferably 50 to 99 mass%. A content of the inorganic particle within the above range can provide a separator in which the composite porous membranes having a pore diameter and a porosity that do not prevent lithium ions from permeating are laminated. Further, a separator with high heat resistance and low heat contraction can be achieved. The content of the inorganic particle in the composite porous membrane is more preferably 55 mass% or more, still more preferably 60 mass% or more, and more preferably 98 mass% or less, still more preferably 97 mass% or less, and particularly preferably 96 mass% or less.

The inorganic particle preferably has an average particle size of 20 µm or less, more preferably 10 µm or less, and still more preferably 5 µm or less. The lower limit of the average particle size is preferably 0.001 µm.

The average particle size is the value obtained by measuring using a transmission electron microscope, a laser diffraction particle size distribution analyzer or the like.

The metal oxide particle is preferably metal oxides other than alkali metals or alkali earth metals from the viewpoint of improving the ion conductivity and the shut-down effect of the separator, and more preferably at least one selected from the group consisting of aluminum oxide, silicon oxide, titanium oxide, vanadium oxide and copper oxide.

The metal oxide particle preferably has an average particle size of 20 µm or less, more preferably 10 µm or less, and still more preferably 5 µm or less. The lower limit of the average particle size is preferably 0.001 µm.

The average particle size is the value obtained by measuring using a transmission electron microscope.

Particularly preferable metal oxide particle is aluminum oxide particle or silicon oxide particle having an average particle size of 5 µm or less in the point of the excellent ion conductivity.

The content of the metal oxide particle in the composite porous membrane is preferably 50 to 99 mass%. A content of the metal oxide particle within the above range can provide a separator in which the composite porous membrane having a pore diameter and a porosity that do not prevent lithium ions from permeating are laminated. Further, a separator with high heat resistance and low heat contraction can be achieved.

The content of the metal oxide particle in the composite porous membrane is more preferably 55 mass% or more, still more preferably 60 mass% or more, and more preferably 98 mass% or less, still more preferably 97 mass% or less, and particularly preferably 96 mass% or less.

The metal oxide particle is preferably hydroxides of alkali metals or alkali earth metals from the viewpoint of improving the ion conductivity and the shut-down effect of the separator, and more preferably at least one selected from the group consisting of magnesium hydroxide, calcium hydroxide, aluminum hydroxide, chromium hydroxide, zirconium hydroxide, and nickel hydroxide.

The metal hydroxide particle preferably has an average particle size of 20 µm or less, more preferably 10 µm or less, and still more preferably 5 µm or less. The lower limit of the average particle size is preferably 0.001 µm.

The average particle size is the value obtained by measuring using a transmission electron microscope.

The content of the metal hydroxide particle in the composite porous membrane is preferably 50 to 99 mass%. A content of the metal hydroxide particle within the above range can provide a separator in which the composite porous membranes having a pore diameter and a porosity that do not prevent lithium ions from permeating are laminated. Further, a separator with high heat resistance and low heat contraction can be achieved.

The content of the metal hydroxide particle in the composite porous membrane is more preferably 55 mass% or more, still more preferably 60 mass% or more, and more preferably 98 mass% or less, and still more preferably 97 mass% or less.

The composite porous membrane further preferably comprises an organic particle. The organic particle is preferably a non-conductive crosslinked polymer, and more preferably a crosslinked polystyrene, a crosslinked polymethacrylate, and a crosslinked acrylate.

The organic particle preferably has an average particle size of 20 µm or less, more preferably 10 µm or less, and still more preferably 5 µm or less. The lower limit of the average particle size is preferably 0.001 µm.

The average particle size is the value obtained by measuring using a transmission electron microscope.

The content of the organic particle in the composite porous membrane is preferably 0 to 49 mass%. A content of the organic particle within the above range can provide a separator in which the composite porous membranes having a pore diameter and a porosity that do not prevent lithium ions from permeating are laminated.

The content of the organic particle in the composite porous membrane is more preferably 2 mass% or more, still more preferably 5 mass% or more, and more preferably 37 mass% or less, and still more preferably 35 mass% or less.

The composite porous membrane may further comprise components other than the above fluorine-containing polymer, the inorganic particle, and the organic particle. Examples of the other components include other resins and rubbers.

Examples of the preferable resin to be used in combination include one or more of polyacrylate, polymethacrylate, polyacrylonitrile, polyamide imide, polyvinylidene fluoride (PVdF), VdF/HEP copolymer resin.

Examples of the preferable rubber to be used in combination include one or more of VdF/HFP copolymer rubber, VdF/TFE/HFP copolymer rubber, and acrylic rubber. These rubbers may be crosslinked or may not be crosslinked.

Examples of the particularly preferable resin or rubber to be used in combination include acrylic rubbers in the point of improving the ion conductivity, and VdF/HFP copolymer rubber, VdF/TFE/HFP copolymer rubber, and VdF/HFP resin in the point of improving the ion conductivity and oxidation resistance.

The VdF/HFP copolymer rubber preferably has the VdF unit/HFP unit of, in terms of molar ratio, 80/20 to 65/35.

The VdF/TFE/HFP copolymer rubber preferably has the VdF unit/HFP unit/TFE unit of, in terms of molar ratio, 80/5/15 to 60/30/10.

The VdF/HFP resin preferably has the VdF unit/HFP unit of, in terms of molar ratio, 98/2 to 85/15.

The VdF/HFP resin preferably has a melting point of 100 to 200°C.

The amount of other resin or rubber to be blended is preferably 400 parts by mass or less, more preferably 200 parts by mass or less, and still more preferably 150 parts by mass or less, based on 100 parts by mass of the fluorine-containing polymer. The lower limit varies depending on the target effect but is about 10 parts by mass.

The composite porous membrane is preferably provided on the porous substrate, and more preferably provided directly on the porous substrate.

Alternatively, the composite porous membrane may be provided on one side or both sides of the porous substrate. Alternatively, the composite porous membrane may be provided so that the composite porous membrane covers entirely through or covers in part of the porous substrate.

The weight of the composite porous membrane is preferably in a range from 0.5 to 50.0 g/m² when forming the composite porous membrane only on one side of the porous substrate. A weight less than 0.5 g/m² may cause insufficient adhesion to an electrode. On the other hand, a weight more than 50.0 g/m² blocks the ion conduction, thereby likely reducing load characteristics of a battery, hence not preferable. The weight of the fluorine-containing polymer for forming the composite porous membrane on both front and back surfaces of the porous substrate is preferably 0.1 to 6.0 g/m².

The porous substrate means the substrate that has vacancies or gaps inside. Examples of such a substrate include microporous membranes, porous sheets made of a fibrous substance such as nonwoven fabrics, paper-like sheet, or composite porous membranes in which one or more other porous layers are laminated onto these microporous membranes or porous sheets. The microporous membrane means the membrane that has many micropores inside and has the structure in which these micropores are connected, through which an air or a liquid can pass through one surface to the other surface.

The material constituting the porous substrate may be an electric insulating organic material or inorganic material. In particular, from the viewpoint of imparting the shut-down effect to the substrate, a thermoplastic resin is preferably used as the constituent material for the substrate. The shut-down function herein refers to the function which shuts off the ion migration at an increased battery temperature when a thermoplastic resin is dissolved and blocks the pores of the porous substrate, thereby preventing the thermal runaway of a battery. Thermoplastic resin appropriately has a melting point of less than 200°C, and a polyolefin is particularly preferable.

The porous substrate that uses a polyolefin is suitably a polyolefin microporous membrane. The polyolefin microporous membrane usable is the polyolefin microporous membrane that has the sufficient mechanical properties and ion permeability and has been used for a separator for a conventional nonaqueous secondary battery. Additionally, the polyolefin microporous membrane preferably comprises polyethylene from the viewpoint of having the shut-down function described above.

The weight average molecular weight of the polyolefin is suitably 100,000 to 5,000,000. A weight average molecular weight of less than 100,000 may cause a difficulty to ensure the sufficient mechanical properties. To the contrary, a weight average molecular weight of more than 5,000,000 may cause poor shut-down characteristic or may cause a difficulty in molding.

Such a polyolefin microporous membrane can be produced by, for example, the following method. Specifically, examples include a method of forming a microporous membrane by sequentially carrying out (i) extruding a melted polyolefin resin from a T-die to form a sheet, (ii) subjecting the sheet to crystallization treatment, (iii) extending the sheet, and (iv) heat treating the sheet. Another example includes a method of forming a microporous membrane by sequentially carrying out (i) melting a polyolefin resin together with a plasticizer such as a liquid paraffin, extruding the molten resin from a T-die, and cooling the resultant to form a sheet, (ii) extending the sheet, (iii) extracting the plasticizer from the sheet, and (iv) heat treating the sheet.

The porous sheet made of a fibrous substance usable include porous sheets made of a fibrous substance composed of polyesters such as polyethylene terephthalate, polyolefins such as polyethylene and polypropylene, heat resistant polymers such as aromatic polyamide and polyimide, polyether sulfone, polysulfone, polyether ketone, and polyether imide, or a mixture of these fibrous substances.

The porous substrate may be a composite porous substrate in which functional layers are further laminated. The composite porous substrate is preferable in the point of adding further functions by the functional layers. The functional layers usable include, from the viewpoint of imparting, for example, heat resistance, a porous layer composed of a heat resistant resin, and a porous layer composed of a heat resistant resin and an inorganic filler. Examples of the heat resistant resin include one or more heat resistant polymers selected from aromatic polyamide, polyimide, polyether sulfone, polysulfone, polyether ketone, and polyether imide. The inorganic filler suitably usable include metal oxides such as alumina, and metal hydroxides such as magnesium hydroxide. Examples of the technique for forming the composite include a method of coating functional layers onto a porous sheet, a method of bonding using an adhesive, and a method of hot pressing.

The porous substrate in the present disclosure is preferably composed of, among those described above, at least one resin selected from the group consisting of polyethylene, polypropylene, polyimide, polyamide, polyethylene terephthalate, polyester and polyacetal.

In the present disclosure, the membrane thickness of the porous substrate is preferably in a range from 5 to 50 µm from the viewpoint of obtaining satisfactory mechanical properties and internal resistance.

The separator of the present disclosure can be produced by laminating the composite porous membrane on the porous substrate. The lamination method is not limited, and a conventionally known method may be used. Specifically, the preferable method includes a method of roll coating a solution or a dispersion obtained by dissolving or dispersing the fluorine-containing polymer, the inorganic particle and optionally used other components in a solvent or water to the porous substrate, a method of dipping the porous substrate in the above solution or dispersion, and a method of applying the above solution or dispersion to the porous substrate and further immersing the porous substrate in an appropriate coagulation liquid for preparation.

Alternatively, a film composed of the composite porous membrane is prepared in advance, and the film and the porous substrate may be laminated by a method such as lamination. Examples of the method for preparing the film composed of the composite porous membrane include a technique in which a solution or a dispersion obtained by dissolving or dispersing the fluorine-containing polymer, the inorganic particle and optionally used other components in a solvent is casted on a smooth surface film such as a polyester film and an aluminum film and then peeled off.

The solvent is suitably amide solvents such as dimethylacetamide (DMAC); ketone solvents such as acetone; and cyclic ether solvents such as tetrahydrofuran. Alternatively, the fluorine-containing polymer and the optionally used other components to be blended may be dispersed in water.

The solution or the dispersion containing the fluorine-containing polymer and the inorganic particle, in the case of water-based, may be prepared by blending a thickener (stabilizer) for adjusting the viscosity. Examples of the thickener (stabilizer) include carboxyalkyl cellulose, alkyl cellulose, and hydroxyalkyl cellulose.

The method for forming the composite porous membrane on the porous substrate is suitably the method in which a slurry-like coating solution containing the fluorine-containing polymer, the inorganic particle, water and the like is applied onto the porous substrate by a known method and dried. The slurry-like coating solution may also contain the above organic particle, thickener and the like.

The slurry-like coating solution preferably contains 0.5 to 25 mass%, more preferably 1 mass% or more, and more preferably 20 mass% or less, of the fluorine-containing polymer. The concentration of the fluorine-containing polymer can be adjusted according to the blending ratio of the fluorine-containing polymer, the inorganic particle and water.

The slurry-like coating solution preferably contains 1 to 60 mass%, more preferably 2 mass% or more, and more preferably 55 mass% or less, of the inorganic particle. The concentration of the inorganic particle can be adjusted according to the blending ratio of the fluorine-containing polymer, the inorganic particle and water.

The slurry-like coating solution, when containing organic particles, preferably contains 1 to 60 mass%, more preferably 2 mass% or more, and 55 mass% or less. The concentration of the organic particle can be adjusted according to the blending ratio of the fluorine-containing polymer, the inorganic particle and water.

The slurry-like coating solution, when containing a thickener, preferably contains 0.1 to 20 mass%. The concentration of the thickener can be adjusted according to the amount of the thickener added to the slurry-like coating solution.

The present disclosure also provides a secondary battery comprising the above-described electrode for a secondary battery and/or separator for a secondary battery. The secondary battery is preferably a lithiumion battery.

Of these, the secondary solid-state battery is preferably a solid-state battery comprising a positive electrode, a negative electrode and a solid electrolyte layer interposed between the positive electrode and the negative electrode, wherein the positive electrode and/or the negative electrode contains the above-described fluorine-containing polymer.

The positive electrode and the negative electrode used in the secondary battery of the present disclosure are the same as those for the above electrode for a secondary battery. Hereinafter, the solid electrolyte layer, the separator and a battery case suitable for use in the secondary battery of the present disclosure will be described in detail.

The solid electrolyte layer used in the secondary battery of the present disclosure is not limited and preferably contains the solid electrolyte described above. The solid electrolyte layer of the present disclosure may be used. The solid electrolyte layer used for the secondary battery of the present disclosure is preferably a layer composed of a sulfide-based solid electrolyte.

The secondary battery of the present disclosure may comprise a separator between the positive electrode and the negative electrode. Examples of the separator include the above-described separator of the present disclosure, porous membranes made of resins such as polyethylene and polypropylene; and nonwoven fabrics made of resins such as polypropylene, and nonwoven fabrics such as glass fiber nonwoven fabrics.

The secondary battery of the present disclosure may further comprise a battery case. While the shape of the battery case used herein is not limited as long as it can house the positive electrode, the negative electrode, the electrolyte layer, and the like described above, and specific examples include a cylindrical shape, a rectangular shape, a coin shape, and a laminated shape. The shape and constitution of the positive electrode, the negative electrode, and the separator may be changed and used according to the shape of each battery.

The method for producing a solid-state battery include, for example, a method for producing a solid-state battery comprising a positive electrode, a negative electrode, and a solid electrolyte layer interposed between the positive electrode and the negative electrode, and examples include preparing the solid electrolyte layer, preparing by kneading the positive electrode or negative electrode active material, a solid electrolyte, a binder, and a solvent or a dispersion medium to prepare a slurry, and forming the positive electrode by applying the slurry to one surface of the solid electrolyte layer, and forming the negative electrode on the other surface of the solid electrolyte layer to produce a solid-state battery.

### Examples

The present disclosure will be hereinafter described in detail based on examples. In the following examples, "part(s)" and "%" represent "part(s) by mass" and "% by mass", respectively, unless otherwise specified.

### (Method for producing a fluorine-containing polymer)

### (Monomer represented by formula (10))

1,2-Difluoroethylene E form when used in each of the following examples had a purity of 99.9 mass% or more. The purity was confirmed by GC/MS for the absence of a peak of impurities to determine 99.9 mass%. The production was carried out according to an example of Patent Literature 1, and the separation was carried out by preparative gas chromatography, thereby obtaining a monomer of a high purity.

### (Polymerization method)

The polymer was polymerized by the polymerization method in accordance with each of the following synthesis examples.

The obtained polymers were evaluated based on the following evaluation criteria.

### (Dimethylacetamide (DMAC) solubility)

0.9 g of DMAC was added to 0.1 of the resin obtained in each of the synthesis examples and stirred using a stirrer. The absence of a residual confirmed one hour later was defined as dissolved.

### (Composition analysis)

The copolymer composition was measured by the solution NMR method or fused-state NMR method.

### <Solution NMR method>

measurement apparatus: VNMRS400; Varian Inc.
resonance frequency: 376.04 (Sfrq)
pulse width: 30°

### <Fused-state NMR method>

measurement apparatus: AVANCE300; Burke Japan
resonance frequency: 282.40 [MHz]
pulse width: 45°

### (Molecular weight)

### [Weight average molecular weight (Mw)]

Based on the result measured by the GPC method, a molecular weight was calculated using standard polystyrene as a reference. The molecular weight was measured according to the kind of the polymer by the following method.
GPC apparatus: TOSOH HLC-8020
Column: two of Shodex GPC806M, one of each GPC801 and 802
Developing solvent: tetrahydrofuran [THF]
Sample concentration: 0.1 mass%
measurement temperature: 40°C
GPC apparatus: TOSOH AS-8010, CO-8020 and SIMADZURID-10A
Column: three of GMHHR-H
developing solvent: dimethylformamide [DMF]
Sample concentration: 0.05 mass%
measurement temperature: 40°C

### (Melting point)

Using a differential scanning calorimeter, the melting point can be measured in accordance with ASTM D4591. Specifically, using a differential scanning calorimeter RDC220 (Seiko Instruments Inc.), the heat measurement of the copolymer was carried out at a temperature-increasing rate of 10°C/min, and the maximum value of the obtained heat of fusion curve was defined as the melting point.

### (Stability test of the slurry)

The viscosity of the slurry immediately after the mixture solution was prepared and the viscosity of the slurry 5 days after the mixture solution was prepared were measured to evaluate the stability of the slurry based on the following calculus equation. The slurry viscosity was measured using a B-type viscometer (TV-10M, Toki Sangyo Co., Ltd) under the condition of 25°C, a rotor No. M4, rotation speed 6 rpm. The value 10 minutes after the measurement started was used as the slurry viscosity of the mixture solution.

Stability of slurry (%) = viscosity 3 days after mixture solution preparation/viscosity of immediately after mixture solution preparation × 100

In examples and comparative examples, the following positive electrode active material and conductive aid were used.
NMC622: LiNi_{0.6}Mn_{0.2}Co_{0.2}O₂
AB: acetylene black

### Polymer Synthesis Example 1

An autoclave having an internal volume of 1.8 L was charged with 1,330 g of deionized water and 0.67 g of methyl cellulose, and then the inside the autoclave was thoroughly vacuum purged with nitrogen. Then, the inside the autoclave was vacuum deaerated, and the vacuumed inside the autoclave was charged with 250 g of 1,2-difluoroethylene E form, 1 ml of methanol, and 2 g of dinormal propyl peroxydicarbonate, the temperature was increased to 45°C over a period of 1.5 hours and maintained at 45°C for 3 hours, and then 4 g of dinormal propyl peroxydicarbonate was further introduced. Subsequently, 45°C was maintained for 4 hours. The ultimate pressure during this period was 2.7 MPaG. Then, the pressure was released to the atmospheric pressure, and the reaction product was washed with water and dried, thereby obtaining 198 g of a fluorine resin powder.

The melting point was 198.3°C.

### Polymer Synthesis Example 2

A stainless steel autoclave having an internal volume of 1.8 L was thoroughly vacuum purged with nitrogen. Then, the inside the autoclave was vacuum deaerated, and the vacuumed inside the autoclave was charged with 1,000 g of HFE-347pc-f, 197 g of 1,2-difluoroethylene E form, 128 g of vinylidene fluoride (VdF), and then the autoclave was heated to 25°C. Subsequently, 10.5 g of an 8% di(ω-hydrododecafluoroheptanoyl)peroxide) (hereinafter abbreviated as "DHP") perfluorohexane solution was fed to the inside the autoclave to start polymerization. The pressure at the initiation was 1.04 MPaG. For maintaining the polymerization pressure, a mixed gas of 1,2-difluoroethylene/VdF = 86.0/14.0 (mol%) was flowed, the temperature the inside the autoclave was maintained at 25°C for 6.3 hours, then the pressure was released to the atmospheric pressure, and reaction product was washed with water and dried, thereby obtaining 86 g of a fluorine resin powder. The obtained resin contained 1,2-difluoroethylene and VdF in a mol% ratio of 86.1/13.9.

The melting point was 197.9°C.

### Polymer Synthesis Example 3

A stainless steel autoclave having an internal volume of 1.8 L was thoroughly vacuum purged with nitrogen. Then, the inside the autoclave was vacuum deaerated, and the vacuumed inside the autoclave was charged with 1,000 g of HFE-347pc-f, 70 g of 1,2-difluoroethylene E form, 250 g of VdF, and then the autoclave was heated to 25°C. Subsequently, 7.0 g of an 8% DHP perfluorohexane solution was fed to the inside the autoclave to start polymerization. The pressure at the initiation was 1.40 MPaG. For maintaining the polymerization pressure, a mixed gas of 1,2-difluoroethylene/VdF = 54.0/46.0 (mol%) was flowed, the temperature inside the autoclave was maintained at 25°C for 6.2 hours, then the pressure was released to the atmospheric pressure, and reaction product was washed with water and dried, thereby obtaining 91 g of a fluorine resin powder. The obtained resin contained 1,2-difluoroethylene and VdF in a mol% ratio of 53.3/46.7.

The melting point was 180.0°C.

### Polymer Synthesis Example 4

A glass-lined stainless steel autoclave having an internal volume of 4.1 L was thoroughly vacuum purged with nitrogen. Then, the inside the autoclave was vacuum deaerated, and the vacuumed inside the autoclave was charged with 2,300 g of HFE-347pc-f, 41 g of 1,2-difluoroethylene E form, and 436 g of VdF, and then the autoclave was heated to 25°C. Subsequently, 14.0 g of an 8% DHP perfluorohexane solution was fed to the inside the autoclave to start polymerization. The pressure at the initiation was 1.11 MPaG. For maintaining the polymerization pressure, a mixed gas of 1,2-difluoroethylene/VdF = 25.0/75.0 (mol%) was flowed, the temperature inside the autoclave was maintained at 25°C for 3.3 hours, then the pressure was released to the atmospheric pressure, and reaction product was washed with water and dried, thereby obtaining 104 g of a fluorine resin powder. The obtained resin contained 1,2-difluoroethylene and VdF in a mol% ratio of 24.2/75.8.

The melting point was 161.7°C.

### Polymer Synthesis Example 5

A glass-lined stainless steel autoclave having an internal volume of 4.1 L was thoroughly vacuum purged with nitrogen. Then, the inside the autoclave was vacuum deaerated, and the vacuumed inside the autoclave was charged with 2,300 g of HFE-347pc-f, 27 g of 1,2-difluoroethylene E form, and 423 g of VdF, and then the autoclave was heated to 25°C. Subsequently, 14.0 g of an 8% DHP perfluorohexane solution was fed to the inside the autoclave to start polymerization. The pressure at the initiation was 1.06 MPaG. For maintaining the polymerization pressure, a mixed gas of 1,2-difluoroethylene/VdF = 16.0/84.0 (mol%) was flowed, the temperature inside the autoclave was maintained at 25°C for 3.4 hours, then the pressure was released to the atmospheric pressure, and reaction product was washed with water and dried, thereby obtaining 125 g of a fluorine resin powder. The obtained resin contained 1,2-difluoroethylene and VdF in a mol% ratio of 16.5/83.5.

The melting point was 162.4°C.

### Polymer Synthesis Example 6

The inside an autoclave having an internal volume of 0.5 L was thoroughly vacuum purged with nitrogen. Then, the inside the autoclave was vacuum deaerated, and the vacuumed inside the autoclave was charged with 150 g of HFE-347pc-f, 23 g of 1,2-difluoroethylene E form, and 4 g of tetrafluoroethylene, and then the autoclave was heated to 28°C. Subsequently, 2.0 g of an 8% DHP perfluorohexane solution was fed to the inside the autoclave to start polymerization. The polymerization pressure at the initiation was 0.5 MPaG. For maintaining the polymerization pressure, a mixed gas of 1,2-difluoroethylene E form/tetrafluoroethylene = 85/15 (mol%) was flowed, the temperature inside the autoclave was maintained at 28°C for 5 hours and 15 minutes, then the pressure was released to the atmospheric pressure, and reaction product was washed with water and dried, thereby obtaining 12.2 g of a fluorine resin powder. The obtained resin contained 1,2-difluoroethylene (E form) and tetrafluoroethylene in a molar ratio of 85.5/14.5.

The melting point was 210.0°C.

### Polymer Synthesis Example 7

The inside an autoclave having an internal volume of 0.5 L was thoroughly vacuum purged with nitrogen. Then, the inside the autoclave was vacuum deaerated, and the vacuumed inside the autoclave was charged with 150 g of HFE-347pc-f, 6.8 g of 1,2-difluoroethylene E form, and 20 g of tetrafluoroethylene, and then the autoclave was heated to 28°C. Subsequently, 1.5 g of an 8% DHP perfluorohexane solution was fed to the inside the autoclave to start polymerization. The polymerization pressure at the initiation was 0.5 MPaG. For maintaining the polymerization pressure, a mixed gas of 1,2-difluoroethylene E form/tetrafluoroethylene = 42/58 (mol%) was flowed, the temperature inside the autoclave was maintained at 28°C for 1 hours and 50 minutes, then the pressure was released to the atmospheric pressure, and reaction product was washed with water and dried, thereby obtaining 13.1 g of a fluorine resin powder. The obtained resin contained 1,2-difluoroethylene E form and tetrafluoroethylene in a molar ratio of 42.4/57.6.

The melting point was 246.5°C.

### Polymer Synthesis Example 8

A 100-ml stainless steel (SUS) autoclave was charged with 40 g of R-225 and 0.43 g of an 8% DHP perfluorohexane solution, cooled to dry ice temperature and nitrogen purged, then charged with 3.0 g of hexafluoropropylene (HFP) and 5.2 g of 1,2-difluoroethylene E form, and shaken at 25°C for 13.0 hours using a shaker. The product was dried, thereby obtaining 2.41 g of a fluorine resin. The obtained resin contained 1,2-difluoroethylene E form and HFP in a molar ratio of 99.2/0.8.

The melting point was 188.5°C.

### Polymer Synthesis Example 9

An autoclave having an internal volume of 1.8 L was charged with 600 g of deionized water and 0.3 g of methyl cellulose, and then the inside the autoclave was thoroughly vacuum purged with nitrogen. Then, the inside the autoclave was vacuum deaerated, and the vacuumed inside the autoclave was charged with 150 g of perfluorooctacyclobutane, 100 g of HFP, and 64 g of 1,2-difluoroethylene E form, and then the autoclave was heated to 35°C. Subsequently, 1.5 g of dinormal propyl peroxycarbonate was fed to the inside the autoclave to start polymerization. The polymerization pressure at the initiation was 1.16 MPaG. The temperature inside the autoclave was maintained at 35°C for 7 hours, then the pressure was released to the atmospheric pressure, and reaction product was washed with water and dried, thereby obtaining 17 g of a fluorine resin powder. The obtained resin contained 1,2-difluoroethylene E form and HFP in a molar ratio of 94.9/5.1.

The melting point was 151.2°C.

### Polymer Synthesis Example 10

A 100-ml stainless steel (SUS) autoclave was charge with 40 g of R-225 and 0.43 g of an 8% DHP perfluorohexane solution, cooled to dry ice temperature, nitrogen purged, and then charged with 3.0 g of 2,3,3,3-tetrafluoropropene (HFO-1234yf) and 9.1 g of 1,2-difluoroethylene E form, and shaken at 25°C for 11.8 hours using a shaker. The product was dried, thereby obtaining 1.81 g of a fluorine resin. The obtained resin contained 1,2-difluoroethylene E form and HFO-1234yf in a molar ratio of 96.5/3.5.

The melting point was 205.9°C.

### Polymer Synthesis Example 11

A 100-ml stainless steel (SUS) autoclave was charged with 40 g of R-225 and 0.43 g of an 8% DHP perfluorohexane solution, cooled to dry ice temperature, nitrogen purged, and then charged with 20.9 g of HFO-1234yf and 3.8 g of 1,2-difluoroethylene E form, and shaken at 25°C for 13.2 hours using a shaker. The product was dried, thereby obtaining 1.23 g of a fluorine resin. The obtained resin contained 1,2-difluoroethylene E form and HFO-1234yf in a molar ratio of 16.3/83.7.

The resin had no melting point.

### Polymer Synthesis Example 12

A 100-ml stainless steel (SUS) autoclave was charged with 40 g of R-225 and 0.42 g of an 8% DHP perfluorohexane solution, cooled to dry ice temperature, nitrogen purged, and then charged with 6.0 g of perfluoro methyl vinyl ether (PMVE) and 10.2 g of 1,2-difluoroethylene E form, and shaken at 25°C for 13.2 hours using a shaker. The product was dried, thereby obtaining 3.0 g of a fluorine resin. The obtained resin contained E form and PMVE in a molar ratio of 95.3/4.5.

The melting point was 173.3°C.

### (Preparation of a secondary battery composition)

The polymers of Synthesis Examples 1 to 12 as the binder, NMC622 as the positive electrode active material, AB as the conductive aid, and DMAC as the solvent were mixed using a stirrer so that a mass ratio of the active material/conductive aid/binder/solvent was 72.8/1.1/1.1/25, thereby obtaining a mixture solution. The mixture solution was allowed to stand at room temperature, and the slurry stability of the mixture solution was evaluated.

The results are shown in Table 1.

### (Preparation of an electrode)

The obtained mixture solution was applied homogeneously onto one surface of a positive electrode current collector (an aluminum foil having a thickness of 20 µm), DMAC was thoroughly volatilized, and then a pressure of 10 t was applied and pressed using a roll press machine thereby to prepare a positive electrode comprising the positive electrode material layer and the positive electrode current collector. The applicability of the positive electrode material layer to the positive electrode current collector is shown in Table 1.

The evaluation of the applicability was visually determined by the following criteria.
Good ··· Electrode with smooth surface was prepared without problem.
Fair ··· Electrode was prepared, but the surface was rough.
Poor ··· Electrode was prepared but partially cracked.

**[Table 1]**

| | | | **Example** | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Monomer compositio n of polymer | Difluoroethy | mol% | 100 | 86.1 | 53.3 | 24.2 | 16.5 | 85.5 | 42.4 | 99.2 | 94.9 | 96.5 | 16.3 | 95.5 |
| | VdF | mol% | - | 13.9 | 46.7 | 75.8 | 835 | - | - | - | - | - | - | - |
| | TFE | mol% | - | - | - | - | - | 14.5 | 57.6 | - | - | - | - | - |
| | HFP | mol% | - | - | - | - | - | - | - | 0.8 | 5.1 | - | - | - |
| | 1234yf | mol% | - | - | - | - | - | - | - | - | - | 35 | 837 | - |
| | PMVE | mol% | - | - | - | - | - | - | - | - | - | - | - | 4.5 |
| Weight average molecular weight | | | 550000 | 1310000 | 1660000 | 670000 | 700000 | 720000 | 990000 | 174000 | 72000 | 131000 | 59000 | 115000 |
| Slurry stability | | % | 104 | 102 | 102 | 104 | 104 | 118 | 116 | 116 | 119 | 110 | 113 | 118 |
| Applicability | | | Good | Good | Good | Good | Good | Good | Good | Good | Faire | Good | Faire | Faire |

### Industrial Applicability

The secondary battery composition of the present disclosure can be suitably used for forming an electrode and the like for a secondary battery by taking advantage of excellent solubility in various organic solvents of the polymer having the structure originated from 1,2-difluoroethylene.

## Claims

1. A secondary battery composition comprising a fluorine-containing polymer and a solvent, wherein the fluorine-containing polymer is a polymer comprising a structural unit represented by formula (1):

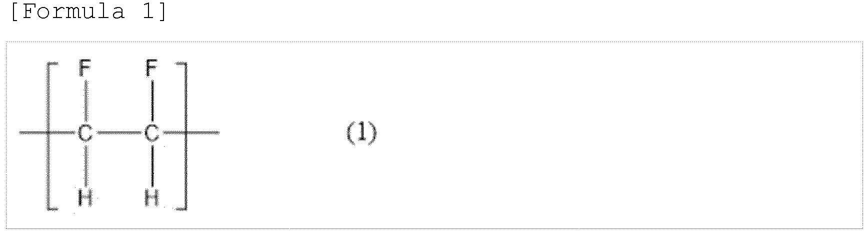

2. The secondary battery composition according to claim 1, wherein the fluorine-containing polymer is a polymer further comprising a structural unit represented by formula (2): 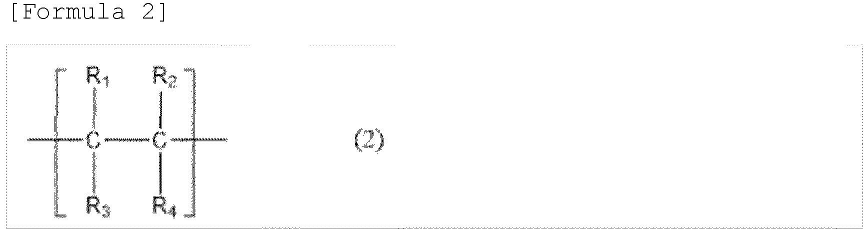 wherein R₁ is hydrogen, fluorine, a partly or wholly fluorinated hydrocarbon group having 5 or less carbon atoms, or an OR₅ group, wherein R₅ group is a partly or wholly fluorinated hydrocarbon group having 5 or less carbon atoms; and R₂, R₃, R₄ are each independently hydrogen or fluorine.

3. The secondary battery composition according to claim 2, wherein the structural unit represented by formula (2) is at least one structural unit selected from the group consisting of structural units represented by formulae (3) to (8):

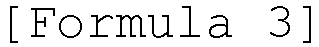

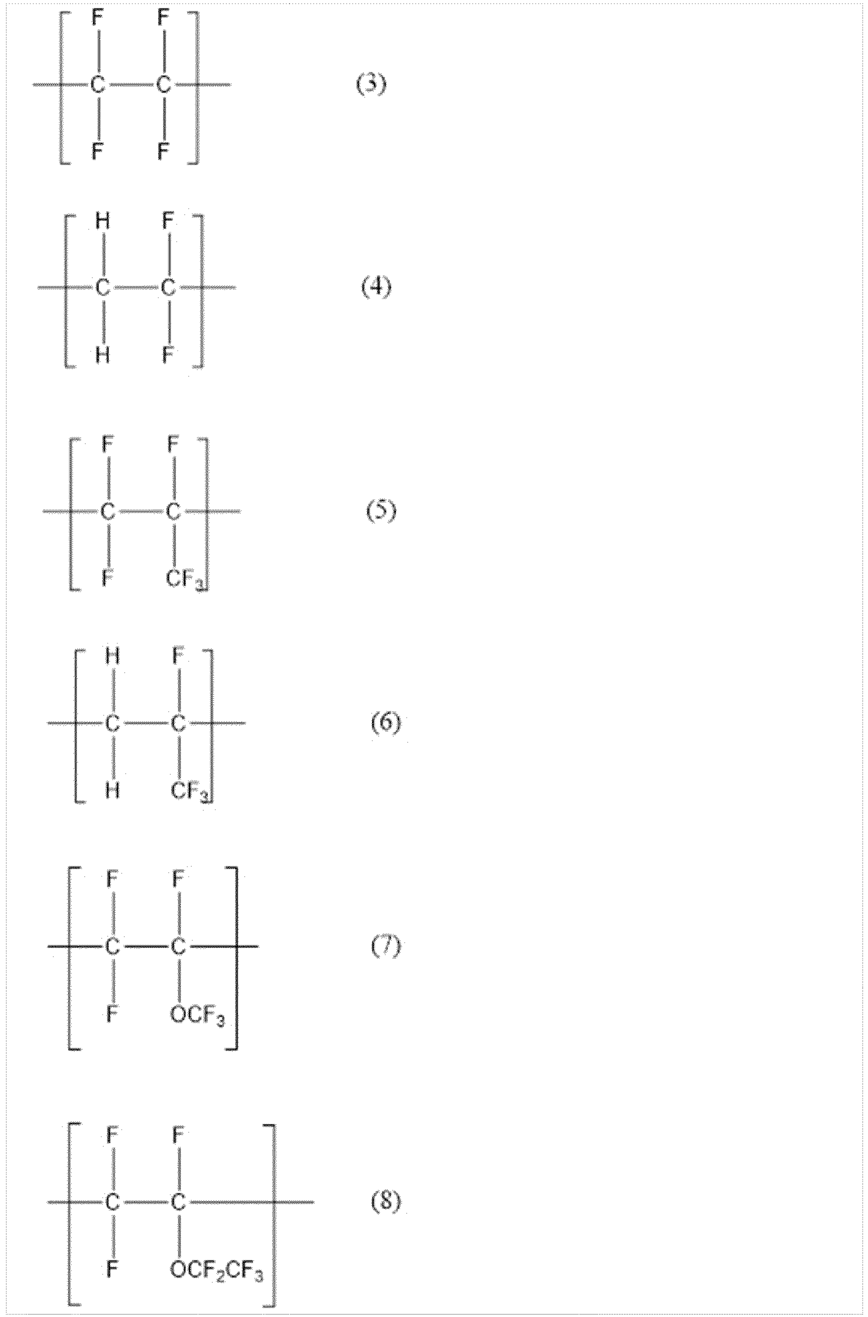

4. The secondary battery composition according to any one of claims 1 to 3, wherein the fluorine-containing polymer has a weight average molecular weight of 50,000 to 5,000,000.

5. The secondary battery composition according to any one of claims 1 to 4, wherein a proportion of the structural unit represented by formula (1) in the fluorine-containing polymer is 0.1 to 100 mol%.

6. The secondary battery composition according to any one of claims 1 to 5, wherein the solvent is at least one compound selected from the group consisting of ester compounds, ketone compounds, and amide compounds.

7. The secondary battery composition according to any one of claims 1 to 6, wherein the composition is for an electrode of a secondary battery.

8. The secondary battery composition according to any one of claims 1 to 6, wherein the composition is for a positive electrode of a secondary battery.

9. The secondary battery composition according to any one of claims 1 to 6, wherein the composition is for a separator of a secondary battery.

10. A method for forming a layer for a secondary battery, comprising:
applying a slurry onto a substrate and heat drying,
wherein the slurry comprises the secondary battery composition according to any one of claims 1 to 9.

11. An electrode for a secondary battery, comprising an active material layer containing a polymer comprising a structural unit represented by formula (1) and an active material.

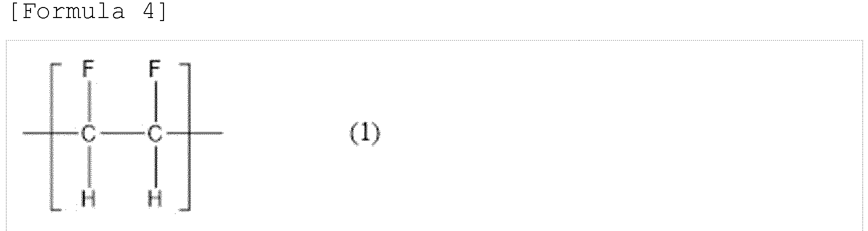

12. A solid electrolyte layer for a secondary battery, comprising a polymer comprising a structural unit represented by formula (1) and a solid electrolyte:

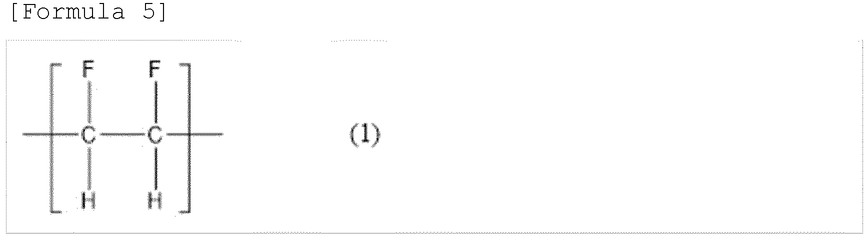

13. A separator for a secondary battery, comprising a polymer comprising a structural unit represented by formula (1):

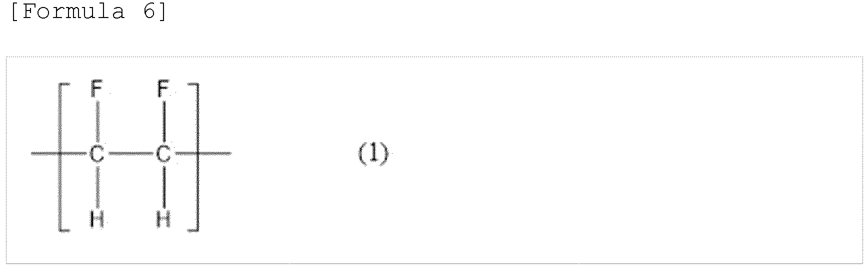

14. A secondary battery comprising the electrode for a secondary battery according to claim 11 and/or the separator for a secondary battery according to claim 13.
